# EUROPEAN PATENT SPECIFICATION

(11) **EP 0 669 856 B1**
(45) Date of publication and mention of the grant of the patent: **15.04.1998**
(21) Application number: 94931770.5
(22) Date of filing: 21.09.1994
(51) Int. Cl.: B01L 3/02, B65D 85/00, B65D 1/34, B65D 6/04

(54) **REFILL PACK FOR PIPETTE TIP RACKS**
NACHFÜLLPACKUNG FÜR PIPETTENSPITZENBEHÄLTER
PACK DE RECHARGE POUR PORTOIRS DE POINTES DE PIPETTES

(30) Priority: 21.09.1993 US 124966; 21.09.1993 US 125019
(43) Date of publication of application: 06.09.1995
(73) Proprietor: RAININ INSTRUMENT CO.,INC., Emeryville, CA 94608 (US)
(72) Inventor: LEMIEUX, David, J., Middleton, MA 01949 (US); CHADWICK, Paul, K., San Francisco, CA 94133 (US); KELLY, Christopher, Larkspur, CA 94939 (US); PETREK, James, S., Danville, CA 94526 (US); RAININ, Kenneth, Piedmont, CA 94611 (US); MAGNUSSEN, Haakon, T., Jr., Orinda, CA 94563 (US); HOMBERG, William, D., Oakland, CA 94618 (US)
(74) Representative: Morgan, James G.
(86) International application number: US9410887
(87) International publication number: WO9508392

(56) References cited:
- WO-A-92/01514
- US-A- 3 937 322
- US-A- 4 349 109
- US-A- 4 577 760
- US-A- 4 963 493
- US-A- 5 057 282
- US-A- 5 324 482

## Description

### FIELD OF INVENTION

The present invention relates to the refilling of pipette tip racks and, more particularly to environmentally protective disposable refill packs of pipette tips for reusable pipette tip racks.

### BACKGROUND OF THE INVENTION

It is the function of pipette tip racks to organize disposable pipette tips in a manner for convenient tip placement on a pipette. Such racks generally comprise a rigid base with vertical sides joined at contiguous edges and horizontally supporting a rigid pipette tip organizing tray having an array of pipette tip receiving holes extending there through. The pipette tips are organized and held vertically in the array of holes for ease of access by a pipette tip user. In this regard, the pipette tip user simply places a hand-holdable pipette over the rack and lowers a distal end of the pipette into a proximal or upper end of a vertically oriented pipette tip and presses down to affix the tip to the pipette. A similar operation is followed by the user when connecting a plurality of tips to a multiple tip pipette. U.S. Patent 4,676,377 describes a conventional pipette tip rack of the type just described, and U.S. Patent 4,779, 467 describes a multiple tip pipette.

Once all tips are dispensed from the tip rack, the rack may be discarded or reloaded with a new supply of pipette tips. The reloading of replacement pipette tips into the tip rack in a rapid, convenient manner is important to pipette users. In this regard, any packaging containing pipette tips for use in reloading pipette tips into a tip rack should arrange the pipette tips in a manner to accommodate direct dispensing of the tips into the array of holes in the organizing tray of tip rack. Further, the packaging should guide and assist in centering the replacement pipette tips over the rack with the array of replacement tips aligned with the array of holes in the pipette tip rack organizing tray upon a lowering of the packaging onto the rack. Moreover, it is important that such packaging protect the replacement pipette tips from damage and contamination during shipping, handling and storage and provide for sterilization of the replacement tips by autoclaving or irradiation. Still further, when plastic materials are utilized for such packaging, it is particularly important to the preservation of our environment that (1) the plastic material be recyclable to the extent possible and (2) the packaging structure be thin, lightweight and of low mass to minimize the amount of non-biodegradable disposable material from such packaging. Furthermore, there is a need for refill packs for manually reloading reusable pipette tip racks with filter containing pipette tips such as the FilterPro of the Rainin Instrument Co., Inc., assignee of the present invention, or, such as the filter devices described in U.S. Patent 5,156,811, assigned to Continental Laboratory Products, Inc. of San Diego, California.

Prior packaging used for stacks of pipette tip racks and for replacement pipette tips for reloading empty pipette tip racks do not satisfy such requirements, particularly the guiding and centering of the replacement tips over the empty tip rack with the array of replacement tips aligned with the array of holes in the organizing tray of the rack. For example, U.S. Patent 3,853,217 describes a stack of rigid stand-alone pipette tip racks, referred to in the patent as "trays". Each tray comprises a horizontally oriented rectangular support. The horizontal support contains transverse stiffening ribs. Each rib extends above the horizontal support and terminates in marginal vertical sides. The sides extend above and below the horizontal support and connect at their contiguous edges to form a skirt. The skirt extends below distal end portions of vertical pipette tips contained in a honeycomb array of openings in the horizontal surface. A shoulder is formed around the skirt so as to accept and support an identical upper tray to rest a lowermost edge of its skirt for stacking of the trays. The shoulder thereby spaces the next upper tray so as to allow the distal end portion of the pipette tips in the upper tray to extend into the open proximal end of the pipette tips in the lower tray. Concentric positioning of the upper tips in the lower tips permits a nested stacking of multiple trays. A cover encloses the topmost tray in the stack. Tape is used to secure the cover and stacked trays; applied to fasten the cover and trays along common sides. Nested stacks of the trays with a cover are enclosed within a snug carton for shipping and storage. Additionally, folded sleeves are included in the shipping carton for covering a tray removed from the stack. The carton is provided with a pipette tip extractor for collecting used tips in the shipping carton. The trays are structurally rigid and have sufficient material thickness to be self supporting. The rigid trays are stored as stacked and used individually.

In use, the stacked trays with the cover taped in place are removed from the shipping carton. Individual trays are removed from the bottom of the stack by severing the tape attaching the lowest tray, leaving the upper trays attached and enclosed until the next bottom tray is to be used. The pipette tips are accessed individually from the tray, since the honeycomb arrangement does not accommodate multiple pipettes. Used pipette tips are disposed of in the shipping carton, using the tip extractor included. As each tray is emptied, it is discarded. Since the trays are intended for stand-alone use, their structure is necessarily heavy, with thick stiffening sections, containing a significant amount of plastic. Therefore, the heavy trays represent a significant environmental disposal problem. Also, the packaging described in the '217 patent is not useful in the reloading of an empty tip rack by guiding or centering an array of replacement pipette tips over and into an aligned array of holes in an organizing tray of the empty rack. Further, the nesting of the trays with upper pipette tips extending into lower tips, precludes the use of the package of U.S. Patent 3,853,217 for storage and dispensing of filter containing pipette tips.

In U.S. Patent 3,937,322, a package containing a stack of trays of pipette tips is disclosed. Each tray comprises a horizontal rectangular support with an array of openings. The openings accept distal end portions of pipette tips and maintain their longitudinal axes in a vertical orientation. The trays are stacked in a carton by telescoping the pipette tips carried by an upper tray into the open upper ends of the pipette tips carried by the next lower tray and by resting a lower surface of an upper tray on the upper edge of the proximal end portions of the pipette tips in a lower tray. The lowermost tray in the stack is supported on a tray support extending vertically from a bottom of the carton. Also attached to the carton is a pipette tip extractor.

In use, the carton is opened at the top and uppermost pipette tip trays are exposed. The pipette tips are accessed from the open top of the carton and individually loaded onto pipettes. This is accomplished by vertically lowering a pipette into the carton, pressing an end of a pipette into a tip to seat the tip thereon and then by lifting the loaded pipette from the carton. When all the pipette tips on the uppermost tray have been thus dispensed from the tray, the tray is discarded, exposing the tips in the tray below. The pipette tip extractor is installed in the wall of the carton and permits a used tip to be extracted from the pipette and dropped into the carton without contact with the user. The carton is then used for disposal of used tips.

As described, the container of the '322 patent is characterized by a number of shortcomings. Because of the telescoping of the pipette tips in the stack of trays, it is not possible to use the packaging of the '322 patent for the storage and dispensing of filter containing pipette tips. Further, for one of the contained pipette tips to be accessible to a user for reloading of a pipette, substantially all the contained pipette tips are exposed to the atmosphere and hence subject to possible contamination. Finally, each tray is supported on the tops of the pipette tips in the next lower tray. Unless the trays and the bottom tray support are formed of a relatively heavy, rigid plastic or equivalent material, the downward pressing of the pipettes in the loading of tips will produce an undesired downward bowing of the trays. The bowing of the tray makes it difficult to insert a pipette onto the end of a pipette shaft. In the case of a multiple-tip pipette, only a small amount of bowing is required to prevent a user from being able to insert pipette tips simultaneously onto all shafts of the multiple-tip pipette simply by pressing down on the pipette. Rather, if the tray bows, a user must (i) check each tip individually in order to assure that each tip is properly secured to each pipette shaft and (ii) secure any loose tips individually by hand. With a heavier, more rigid rack support, such bowing will not occur. However, if the trays and the bottom tray support are formed of a heavy rigid plastic or equivalent material to prevent such undesired bowing of the trays during the loading of pipettes, then the disposal of such trays will present an undesired increase in the disposal of non-biodegradable materials. Further, the packaging described in the '322 patent is not useful in the reloading of an empty tip rack by guiding or centering an array of replacement pipette tips over and into an aligned array of holes in an organizing tray of the empty rack.

Prior commercially available packaging of stacks of pipette tip racks similar to the packaging disclosed by the U.S. Patent 3,853,217 and possessing all the disadvantages thereof is represented by the RBR packaging of Bio-Rad Laboratories, Inc. of Richmond, California. TBR Packaging comprising a stack of separate stand alone racks is also available from Bio-Rad Laboratories, Inc. In addition, USA/Scientific Plastics of Ocala, Florida markets a RE-PACK RACK comprising a reusable pipette tip rack designed to accept RE-PACK Tray Cartridges preloaded with 192 pipette tips per tray. Once a tray is empty, it is simply removed from the rack and discarded and another tray of cartridges inserted in its place. The RE-PACK Tray Cartridges are formed of a rigid, relatively heavy plastic construction and, but for the transverse ribs, resemble and possess the disadvantages of the trays disclosed in the U.S. Patent 3,853,217. Such RE-PACK tray cartridges are available in shrink-wrapped stacks of 5 trays of 192 tips each.

International Patent Application PCT/DE90/00551, published under the number WO92/01514 on February 6, 1992, describes a refill unit supporting an array of pipette tips for an autoclavable container containing an perforated plate with an array of openings for receiving the pipette tips. The refill unit comprises a holding device which receives the array of pipette tips in an arrangement corresponding to the array of openings in the perforated plate. Upon a breaking or other destruction of the holding device, the pipette tips are released and dispensed into the openings of the perforated plate. To accommodate such a breaking and release of pipette tips from the holding device, the holding device includes a grid with a plurality of parallel webs between which the pipette tips sit. A grip extends from the grid such that by pulling on the grip, the webs are broken along breakage points to allow the array of tips to dispense from the grid into the openings in the perforated plate. Thus, in use, the refill unit contemplates the destruction of the holding device and requires a manual breaking of the device to affect a refill of the autoclavable container. Further, in such a pipette tip dispensing operation, the array of pipette tips supported by the grid must be seated firmly in the openings in the perforated plate before the grip is pulled to effect a release of the tips from the grid. Otherwise, the tips are likely to be displaced or even removed from the container with the pulling on the grip to break and remove the grid comprising the holding device.

From the foregoing, it should be appreciated that prior packages for pipette tip racks and trays and prior pipette tip refill units have not satisfied the previously stated requirements for packaging for reloading of disposable pipette tips into reusable tip racks. Thus, there is a continuing need for such packaging which is satisfied by the present invention.

### SUMMARY OF THE INVENTION

In its most basic form, the present invention provides a simple, low cost and disposable or recyclable refill pack for reusable pipette tip racks. Basically, the refill pack includes a hand holdable pipette tip positioning means (35, 90) for releasably holding a plurality of pipette tips (24) and for positioning distal ends of the pipette tips in holes (23) in a rigid horizontally extending pipette tip organising tray (21, 86)) of the pipette tip rack, wherein the refill pack (70) includes a support plate (74) supported by the positioning means (35, 90) and including a plurality of enlargeable openings (76) comprising releasable means (82) for releasably supporting the pipette tips (24) and for enlarging in response to a downward force on the pipette tips (24) to dispense the pipette tips through the enlargeable openings (76) in the support plate (74) into the holes (23) in the organising tray (21, 86) in the empty tip rack (21, 84).

In another embodiment the refill pack (10) for an empty pipette tip rack (12) comprises a horizontally extending support (22) including an array of holes (28) for receiving and organizing an array (32) of pipette tips (24) width proximal end portions (34) above the support and with distal end portions (30) below the support to extend into a matching array of holes (23) in a rigid horizontally extending organizing tray (21) of the rack (12), and hand-holdable positioning means (35) formed of a light weight, low mass material and including vertically extending sides (40) terminating in an open bottom (50) receiving the support (22) and the array of pipette tips (24) for centering the array of pipette tips over the empty pipette tip rack (12) with the distal ends of the tips vertically positioned in and through the array of holes (23) in the organizing tray (21), wherein
the support (22) comprises a separate support plate (26); and releasable means (42) for (i) releasably securing the support plate and the array of pipette tips (24) within the open bottom (50) of the positioning means (35) and (ii) actuation by a user to release the support plate and the array of pipette tips from the positioning means downward through the open bottom (50) into the holes in the organizing tray of the empty pipette tip rack.

Preferred embodiments are presented setting forth details referred to and illustrated in the drawings described below. The variations of the invention hereinafter described may be embodied as a single array refill pack or a multiple array refill pack and may include a pipette tip rack as well. Multiple array refill packs, according to the present invention, may comprise a stack of separate arrays of pipette tips or an array of stacks of pipette tips wherein tips at each level in each stack combine to form a array of pipette tips.

### BRIEF DESCRIPTION OF THE DRAWINGS

Fig. 1a is a sectional side view of a thin-wall lightweight single array pipette tip refill pack according to the present invention with extended sides forming (i) releasable means for retaining a pipette tip organizing and support plate and (ii) a guide for positioning and centering the organizing plate and an array of pipette tips supported thereby over a tip rack.

Fig. 1b is a side view similar to Fig. 1a further showing a typical pipette tip rack with the sides of the refill pack guiding the pack onto the rack with distal ends of the pipette tips (which may comprise filter containing tips) vertically aligned with and entering an array of holes in a horizontal organizing and support tray included in the tip rack.

Fig. 1c is a side view similar to Fig. 1b illustrating a release of the pipette tips from the refill pack into the reusable tip rack.

Fig. 1d is a side view of the tip rack of Fig. 1b and 1c refilled with the array of pipette tips.

Fig. 2 is an enlarged partial side view of the refill pack of Fig. 1a showing the detail of the extended sides with the guide indentations for positioning the refill pack and also showing the detail of the positioning indentations in the cover for holding the pipette tips in a vertical position.

Fig. 3 is a fragmentary sectional top view showing a typical corner detail of the refill pack guide means for positioning the refill pack on a tip rack.

Fig. 4 is a side view of a transparent plastic multiple array refill pack showing conventional pipette tips telescoped, positioned in a support grid carrier plate and contained in a multiple dispenser thin-wall shell.

Fig. 5 is an enlarged partial top view of a punched sheet forming variable size holes for control of nested pipette tip release in the embodiment of Fig. 4.

Fig. 6 is an enlarged partial side view of the embodiment of Fig. 4 partially in section and positioned on a tip rack.

Figs 7a, 7b and 7c depict the refill pack of Fig. 4 and the process of refilling an empty tip rack with a replacement array of pipette tips from the refill pack of Fig. 4. Fig. 7a shows the refill pack of Fig. 4. Fig. 7b shows the refill pack of Fig. 4 positioned on an empty tip rack. Fig. 7c shows the refill pack of Fig. 4 with a lowermost array of replacement tips being dispensed into the tip rack.

Fig. 8 is a partial side view of an alternate embodiment of a transparent plastic multiple array refill pack showing conventional pipette tips positioned in single array carrier plates stacked and contained in a multiple dispenser thin-wall shell and positioned on a fully loaded tip rack.

Fig. 9 is a top view partially cut away of a corner of a push plate and carrier plate in the embodiment of Fig. 8.

Fig. 10a is a sectional side view with a central portion removed and showing an embodiment of a thin-wall lightweight tubular shell refill pack with a horizontal support plate and releasable side fastening means. The tubular shell provides protection for the contained pipette tips and functions as a guide for the support plate and array of pipette tips carried thereby on an empty tip rack to refill the rack as shown in Fig. 10c.

Fig. 10b is a fragmentary top view of the embodiment of Fig. 10a showing the tubular shell surrounding and releasably constraining the support plate and showing the releasable fastening tab.

Fig. 11a is a full section end view of a single array pipette tip refill pack comprising a thin section flexible releasable cover over a pipette tip support plate.

Fig. 11b is a partial section end view of nested pipette tips as contained in two stacked single array refill packs as shown in Fig. 11a but illustrating the use of openings in the cover coincident with openings in the support plate to permit the single array refill packs to be stacked in a space efficient manner.

Fig. 15a is a shortened section side view of a single array pipette tip refill pack comprising a sleeve surrounding and releasably attached to a pipette tip support plate, the sleeve including an upper flange for retaining a cover over an array of pipette tips.

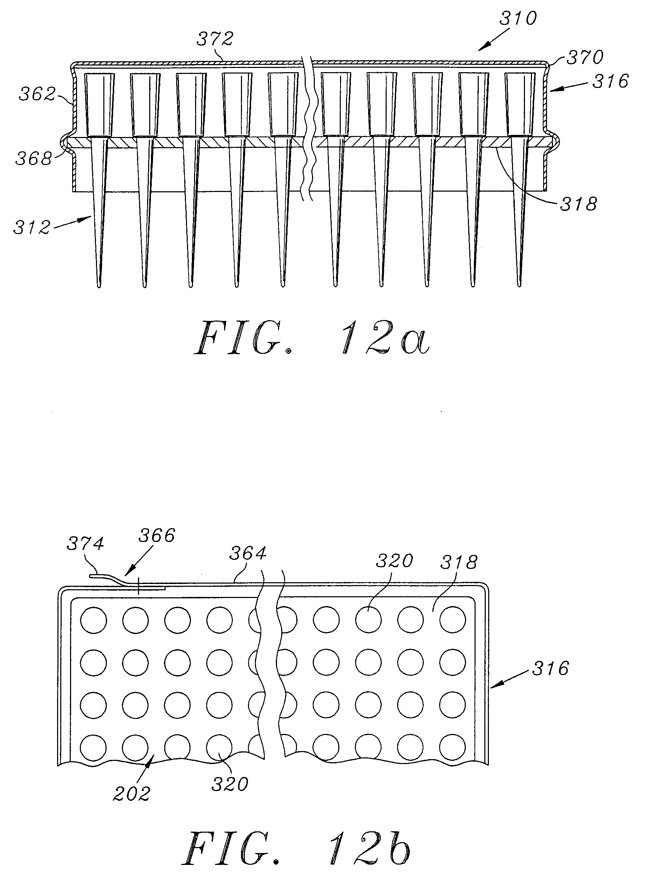

Fig. 12b is a partial top view of the refill pack of Fig. 12a with the cover removed to show the sleeve surrounding the support plate, a sleeve seam, a fastener and a tab on opposite ends of the sleeve for releasably removing the sleeve from the support plate.

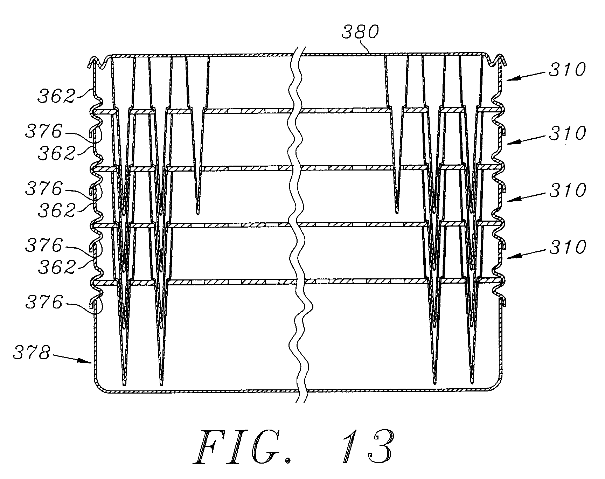

Fig. 13 is a shortened section side view of a covered set of nested single array refill packs similar to Fig. 12a resting on a base container, distal end portions of pipette tips in an uppermost array being concentrically contained within proximal end portions of a lower array of pipette tips.

### DESCRIPTION OF THE PREFERRED EMBODIMENTS

The present invention provides a novel refill pack of disposable pipette tips for reusable pipette tip racks arid may take any of a multiplicity of forms within the claims hereafter presented.

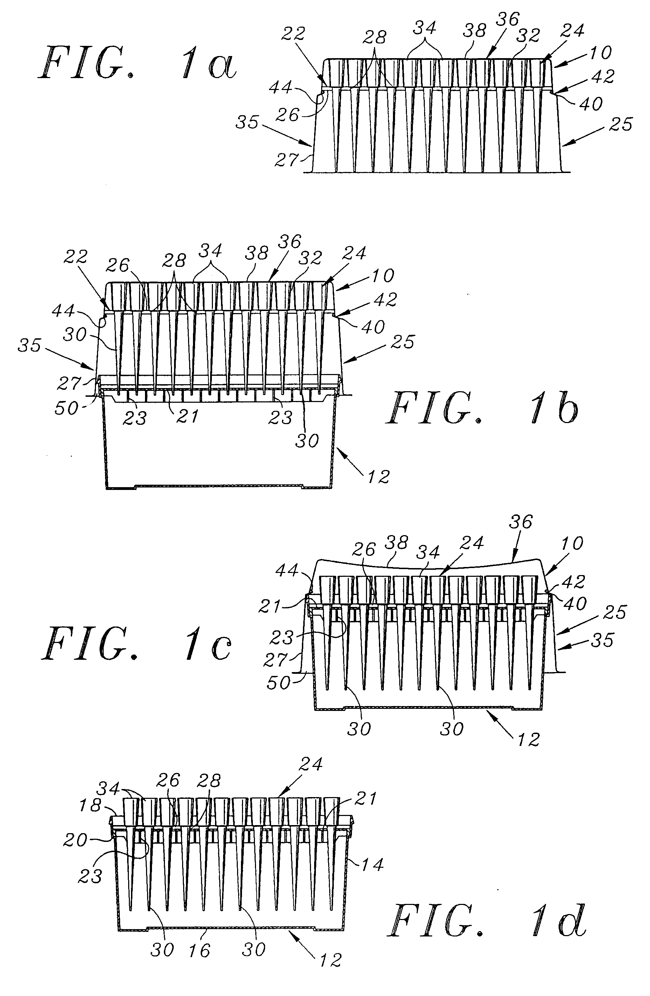

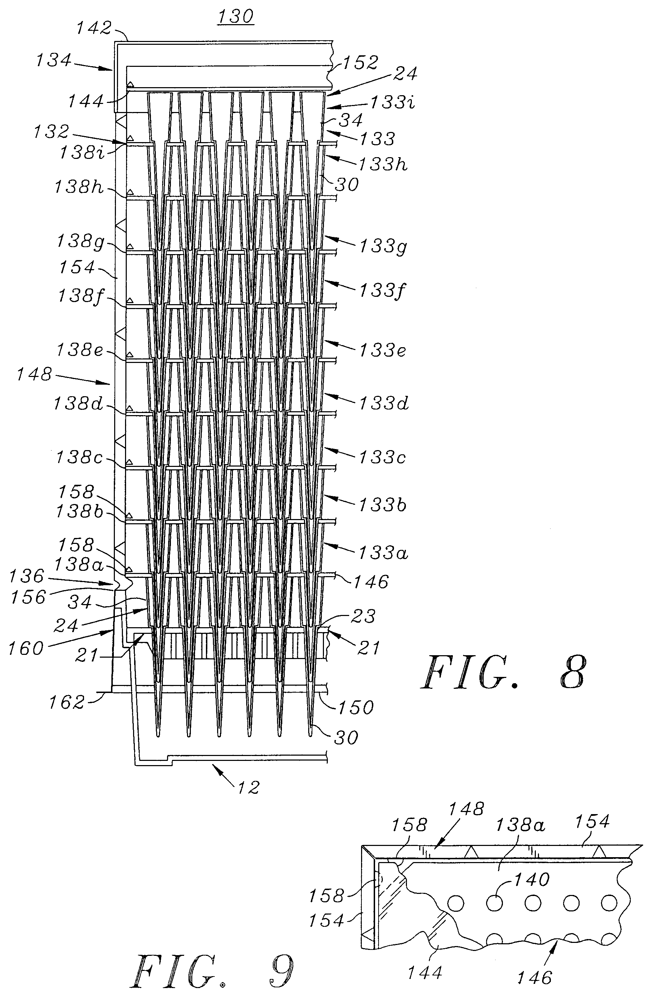

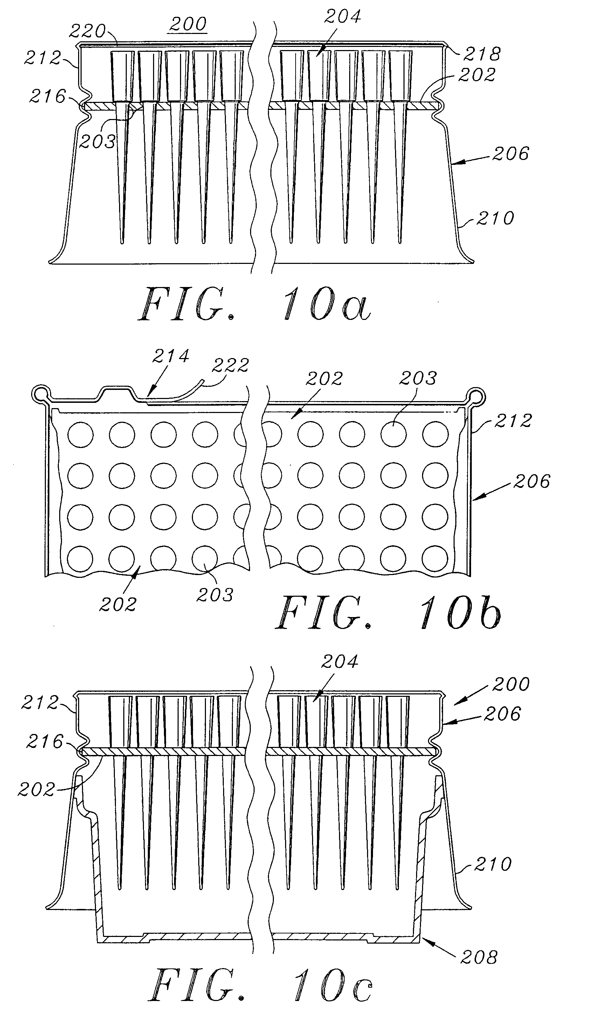

Generally, a basic form of single pipette array refill packs are shown in Figs.1a-d, 2 and 3. A first preferred embodiment of the refill pack for pipette tips in a nested multiple array is shown in Figs. 4, 5, 6 and 7a-d, while a second preferred embodiment for pipette tips in a stacked multiple array refill pack is shown in Figs. 8 and 9. Still another embodiment of a single array pipette tip refill pack is presented ink Figs. 10a-c. Each embodiment may include or exclude a tip rack as part of the refill pack. Additionally, the materials for use in the present invention may be selected as appropriate for sterilization by autoclaving or irradiation.

More particularly, the first basic embodiment comprises a single array refill pack 10 as shown in Figs. 1a, 1b and 1c for refilling a rigid, reusable pipette tip rack 12 as shown in Fig. 1d. The rack 12 includes rigid side support members 14 extending vertically from a horizontal base 16 and joined at contiguous edges thereby forming a strong essentially rectangular container enclosed on five sides and with an open top 18. Formed in an inner surface of each side member 14 or attached thereto is a horizontal support or shoulder 20 vertically displaced from the base 16 and horizontally supporting a rigid pipette tip organizing tray 21. The tray 21 includes an array of horizontally spaced holes 23 for receiving distal end portions 30 of pipette tips 24 dispensed from the refill pack 10.

As depicted in Figs. 1a and 1b, the single array refill pack 10 for pipette tips 24 comprises a horizontally extending pipette tip organizing and support structure 22 and a hand-holdable guide 35 formed as an integral unit of a light weight, low mass, semi-rigid or flexible plastic or equivalent material. The hand-holdable guide 35 comprises contiguous sidewall members 25 extending upwardly from a marginal edge of the support structure 22 and downwardly and slightly outward to define skirt 27 for protecting the pipette tips 24 carried by the support structure 22 and having an open bottom 50 for closely receiving the tip rack 12 as shown in Figs. 1b and 1c. In this regard, the skirt 27 is dimensioned relative to the tip rack 12 such that as the tip rack is received by the skirt, inner surfaces of the skirt slide along outer surfaces of the side support members 14 of the tip rack as the skirt is lowered over the tip rack. In this manner, the skirt 27 functions to center and guide the support structure 22 over and downward onto the tip rack 12 with the pipette tips mounted vertically in the holes 23 in the organizing tray 21 as shown in Figs. 1b and 1c. Thus, the downward guiding of the support structure 22 by the skirt 27 over the tip rack 12 automatically positions and secures the distal end portions of the pipette tips 24 vertically in the holes 23 of the organizing tray 21 to reload the tip rack. This is accomplished without requiring a high degree of hand-eye coordination or manual dexterity on the part of the user. Further, as shown in Figs. 1c and 1d, when mounted on the tip rack 12, the support structure 22 rests on the rigid organizing tray 21 and is supported by the rigid rack. Since the refill pack 10 thus depends on the tip rack for its structural support in subsequent loading of single and multiple tip pipettes, it can be and preferably is formed of a relatively low cost, light weight, semi-rigid or flexible plastic which may be recycled or if discarded represents a minimal contribution to non-biodegradable waste.

As depicted in Figs. 1a through 1c, in a preferred single array refill pack according to the present invention, the support structure 22 of the refill pack comprises a separate, semi-rigid or flexible plastic, horizontally oriented rectangular support plate 26 having the array of holes 28 extending therethrough. The array of holes 28 in the support plate 26 corresponds dimensionally and spatially to the array of holes 23 in the organizing tray 21 of the tip rack 12. Each hole 28 is dimensioned to just receive the relatively narrow and tapered distal end portion 30 of a pipette tip 24 with its longitudinal axis vertically oriented. The larger proximal end portion 34 of the pipette tip 24 will not fit through the hole 28 such that the proximal end portion extends vertically from the support plate 26 on a side opposite the distal end. In this manner, the support plate 26 supports the pipette tips 24 in an array 32 with the distal end portions 30 extending vertically through the holes 28 and the proximal end portions 34 extending vertically from an opposite side of the support plate for protection by the guide 35.

In the embodiment of Fig. 1a, the guide 35 comprises a dome-shaped cover or container 36, preferably formed of a thin, light weight flexible plastic material. In this regard, the cover 36 is formed with a horizontally extending, downward or inwardly flexible top 38 and with contiguous, outwardly flexible side members 40 extending vertically downward and slightly outward from a marginal edge of the top 38 to form the open bottom skirt 27. In addition, the cover 36 includes manually releasable means 42 for releasably securing the support plate 26 horizontally within the cover with the proximal end portions 34 of the pipette tips adjacent the inwardly flexible top 38 and with lower ends of the side members 40 extending beyond the ends of the distal end portions 30 of the tips 24 to enclose and protect the tips. Preferably, the releasable means 42 is formed in the side members 40 and comprises vertically positioned, inwardly extending horizontal protrusions 44 for releasably supporting and retaining the support plate 26 within the cover 36. The protrusions 44 are spaced from an open bottom 50 of the skirt 27 such that the proximal end portions 34 are captured in a chamber between the top 38 and the support plate 26 and the distal end portions 30 are confined by the skirt 27 which extends downwardly beyond the distal ends to provide protection therefor.

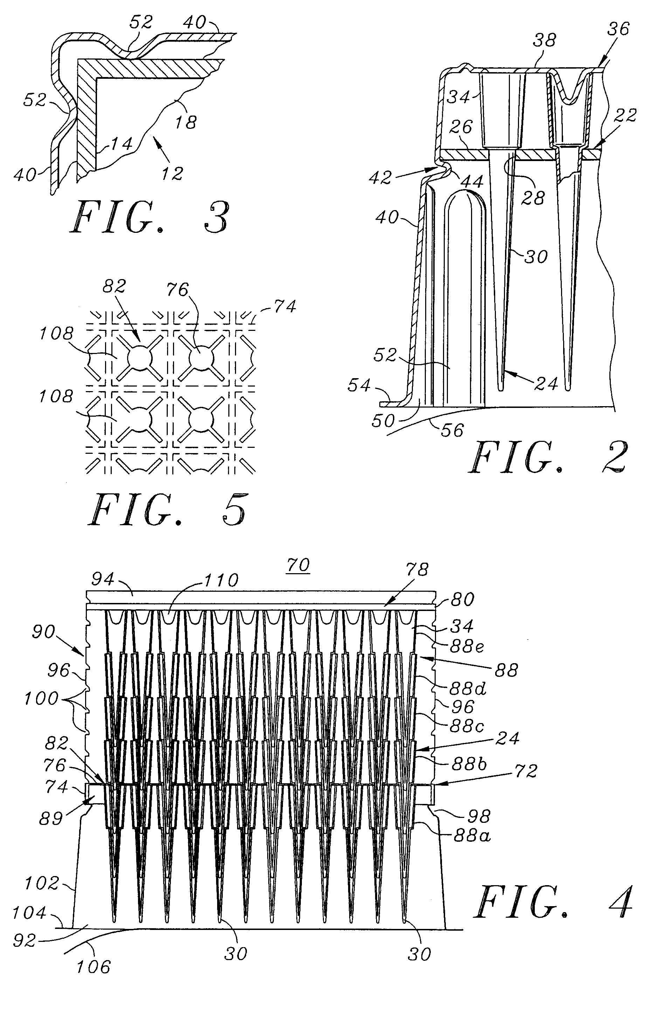

Further, as shown in Figs. 2 and 3, the side members 40 extend beyond the releasable means 42 and include at the corners of the cover 36, vertically extending protrusions or guides 52 for guiding the cover 36 over and onto the open top 18 of the tip rack 12 as shown in Fig. 3.

Still further, ends of the side members 40 remote from the top of the cover 36 project outwardly at right angles to the vertical side members 40 to form a continuous horizontal flange 54 surrounding the opening 50 for attaching a sheet 56 of removable lidstock. The sheet 56 provides means for enclosing the opening 50 of the cover 36 with a material suitable for autoclaving or irradiating and for permitting identifying labelling to be applied thereto or embedded therein. Removal of the sheet of lidstock 56 prepares the refill pack 10 for reloading of the empty tip rack 12 as shown in Figs. 4b, 4c and 4d.

In these regards, the skirt 27 is dimensioned relative to the rack 12 so as to position and center the support plate over the open top 18 of the tip rack as the skirt is lowered onto the rack as shown in Figs. 1b and 1c. During such lowering of the skirt, the guides 52 engage and ride downwardly on the outer surfaces of the side support members of the tip rack as shown in Fig. 3. Further, as depicted in Figs. 1b and 1c the guiding and centering provided by the skirt 27 aligns the distal end portions 30 of the pipette tips 24 with the holes 23 in the organizing tray 21 of the tip rack such that upon a lowering of the skirt, the distal end portions vertically enter and are seated within the holes 23. With the skirt thus positioned, the user presses downward on the top of the cover 36 to inwardly flex the cover and outwardly flex the side members 40 as shown in Fig. 1c. With such outward flexing of the side members 40, the support plate is released by the releasable means 42 to fall downwardly onto the organizing tray 21 for support thereby. The cover 36 then is removed leaving the reloaded tip rack as depicted in Fig. 1d.

From the foregoing, it is appreciated that the preferred basic form of the present invention possess all of the previously listed desired structural and function features of a refill pack for reloading empty reusable tip racks. In particular, the refill pack is easy to use and automatically positions an array of replacement pipette tips in the tip rack. Further, the refill pack depends on the tip rack for structural strength during subsequent loading of pipette tips onto single and multiple-tip pipettes. Therefore, the refill pack is formed of light weight, semi-rigid or flexible, low mass plastic materials presenting a minimum of disposable waste.

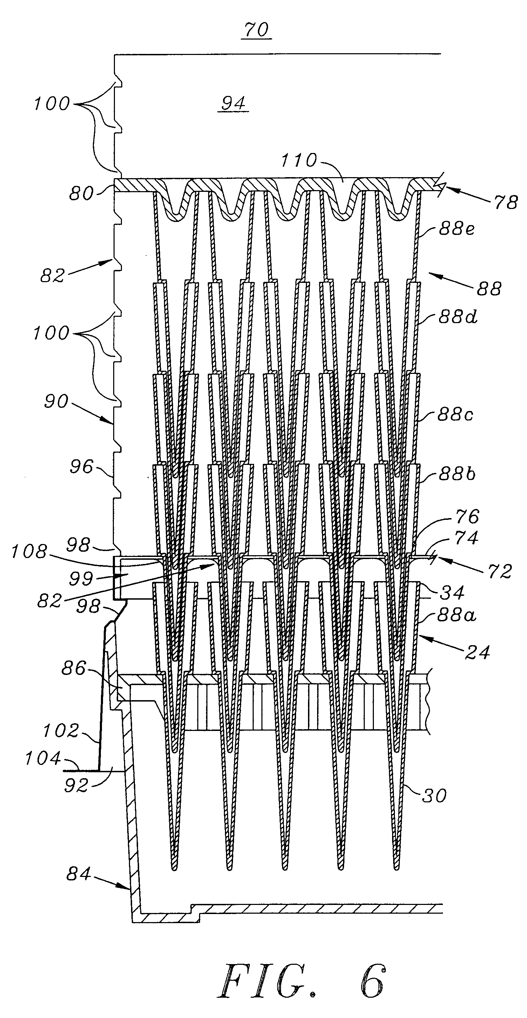

A second preferred embodiment of the present invention possessing all of the foregoing features comprises the refill pack 70 for nested multiple arrays of pipette tips shown in Figs. 4, 5, 6 and 7a-7c. Refill pack 70 comprises (1) an organizing means 72 including a support plate 74 with an array of holes 76 vertically supporting pipette tips 24, (2) a cover means 78 for confining the proximal end portions 34 of the uppermost pipette tips 24 and including a push plate 80, and (3) a releasable means 82 for releasably securing the proximal end portion 34 of the pipette tips 24 in the organizing means 72. Upon application of a downward force actuating the releasable means 82, a lowermost array of the pipette tips 24 drops vertically from the refill pack 70 into a tip rack 84 containing a horizontally extending pipette tip organizing tray 86. In this regard, and as most clearly shown in Fig. 6, a lower end of the cover means 78 forms an open-bottom skirt 102 which is dimensioned to guide and center the organizing means 72 over the organizing tray 86 of the tip rack 84 with distal ends of the lowermost array of tips 24 aligned with corresponding holes in the tray to provide vertical support for the tips as they drop into the organizing tray.

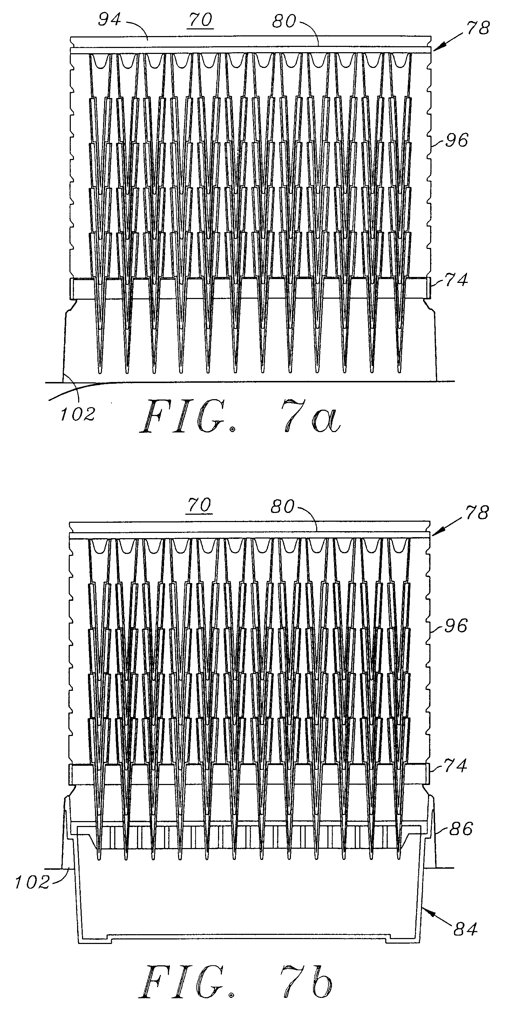

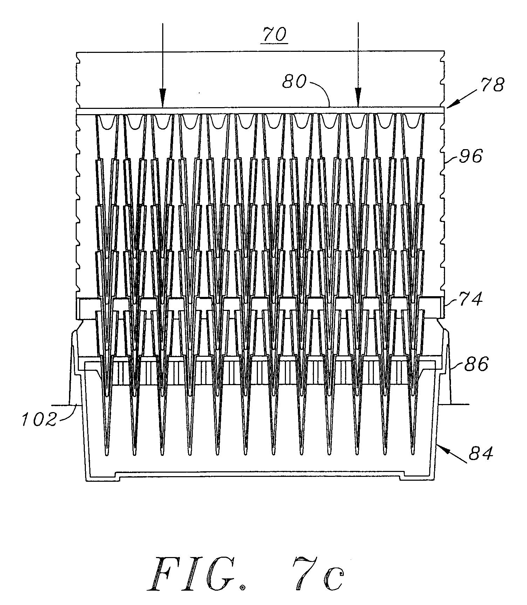

The foregoing sequence of use of the refill pack 70 in reloading the tip rack 84 is depicted in Figs. 7a-7c. Fig. 7a depicts the refill pack 70 as stored ready for use. Fig. 7b depicts the refill pack 70 over the tip rack 84 with the skirt 102 guiding and centering the refill pack onto the rack with the distal end portions of a lowermost array of pipette tips 24 aligned with and entering the array of holes in the organizing tray 86. Fig. 7c depicts the dispensing of the lowermost array of pipette tips from the refill pack 70 in response to a downward manual movement of the push plate 80. More particularly, as most clearly shown in Figs. 4 and 6, the refill pack 70 vertically separates arrays 88a-e of horizontally spaced pipette tips 24 telescopically stacked within the pack with distal end portions 30 of pipette tips 24 in the lowermost array 88a extending downward through the holes 76 in the horizontally oriented support plate 74. The distal end portions 30 of the pipette tips 24 in the next lowermost array 88b telescope into the proximal end portions 34 of the pipette tips 24 in the array 88a while distal end portions 30 of the pipette tips 24 in the array 88c telescope into the proximal end portions 34 of the pipette tips 24 in the array 88b and so on up to the array 88e, all as shown in Figs. 4 and 6. As depicted, each pipette tip 24 in each of the arrays 88a-e is equally displaced in a vertical direction from a similarly placed tip 24 in an adjacent vertical stack so as to create equally spaced layers of arrays.

In the refill pack 70, the proximal end portions 34 of the uppermost pipette tips 24 engage the cover means 78 comprising the horizontally oriented push plate 80 within a four sided tubular container 90. The container 90 may be formed of a light weight plastic and is dimensioned to receive and capture the horizontal support plate 74 of the organizing means 72 at a lower open end 92 and to receive the push plate 80 at an upper open end 94 of the container 90. Opposing sides 96 of the tubular container 90 are essentially rectangular, parallel, vertically oriented and mutually attached at contiguous edges thereby enclosing an essentially rectangular volume. The sides 96 include vertically spaced and horizontally extending inward projections 98 positioned to constrain and position the organizing means 72 with marginal edges within a channel 99 adjacent to the lower opening 92 of the container 90. Thus positioned, the support plate 74 places the pipette tips 24 of the lowermost array 88a with distal end portions 30 of the pipette tips 24 extending downward through the array of holes 76 in the support plate 74 for protection within the lower end of the container 90. Additional inward projections 100 in the sides 96 of the container 90, comprise horizontally separated, vertical series of triangularly shaped ramps, spaced at equal intervals vertically above the support plate 74 to permit downward incremental movement of the push plate 80 and prevent an upward return movement. The distance of the downward incremental movement of the push plate 80 thereby affects a sequential releasing of the lowermost one of the arrays 88 of pipette tips 24 from the telescoped vertical stack of pipette tips 24 through the holes 76 in the support plate 74 into the holes in a tray 86 in the pipette tip rack 84 and a positioning of the distal end portions 30 of the next lowermost array of pipette tips 24 in the holes 76 for subsequent release.

As shown in Fig. 6, the sides 96 also form a skirt 102 at the lower open end 92 of the container 90 for positioning the refill pack 70 over the tip rack 84 with the distal end portions 30 of the pipette tips 24 extending downward therein and aligned with holes in a tray 86 in the tip rack 84 as depicted by the sequence of Figs. 7a-7c.

While the refill pack 70 may be provided commercially in a package on top of an empty tip rack, such as 84, and secured thereto by a removable band surrounding a junction between the sides 96 and the tip rack, alternatively as shown in Fig. 4, the open end of the refill pack may be closed by a removable sheet of lidstock. In that regard, as shown in Fig. 4, at the lowermost edge of the guide 102, the vertical sides 96 of the container 90 extend horizontally outwardly forming a flange 104. The flange 104 extends continuously around the opening 92 and provides for attachment of a lidstock 106 to protect the downward extending distal end portions 30 of the pipette tips 24. The lidstock 106 may be attached by adhesive, thermal bonding, or mechanical means.

As shown in Figs. 5 and 6, the releasable means 82 for releasably securing the organizing means 72 relative to the cover means 78 comprises the series of inward projections 100 for engaging the push plate 80 as already described and moveable means 108 extending into the holes 76 of support plate 74 to define enlargable openings for receiving and holding the distal end portions 30 of the lowermost array 88a of pipette tips 24. The moveable means 108 receive and enlarge to pass the proximal end portions 34 of the lowermost array 88a of pipette tips 24 and to dispense the array 88a into the tip rack 84 with a downward movement of the arrays 88a-e in response to corresponding downward movement of the push plate 80 against the proximal end portions 34 of the uppermost array 88e of the pipette tips. Following the passage and release of the proximal end portions 30 of the array 88a of pipette tips 24, the moveable means 108 extending into each hole 76 returns to its smaller dimension to accept the distal end portions 30 of the next lowermost array 88b of telescoped pipette tips 24 as they descend into a dispensing position. The foregoing dispensing operation may then be repeated for the array 88b and so on until all of the arrays of pipettes are dispensed by the refill pack into pipette tip racks.

As previously noted, the cover means 78 as shown in Figs. 4 and 6 comprises the horizontally oriented rigid push plate 80. As shown the push plate preferably includes a plurality of spaced indexing means 110 fitting into the proximal end portions 34 of uppermost array 88e of pipette tips 24. The spaced indexing means 110 may take the form of indentations with the center of each indentation coincident with the center of identically located holes 76 arrayed in the support plate 74. Such an arrangement maintains the longitudinal axes of the stack pipette tips forming arrays 88a-e in vertical alignment within the container 90 for successive release of the lowermost ones of the pipette tip arrays into the pipette tip tray 86 of the rack 84 as described above.

As previously noted, the third preferred embodiment of the present invention comprises a stacked multiple array refill pack 130 as shown in Figs. 8 and 9. Generally speaking, the refill pack 130 resembles the refill pack 70 of Figs. 4-7c and comprises a vertical tubular container 148 forming a basic element of a cover means 134 for the refill pack 130. As illustrated, the container 148 may be formed of a thin light weight plastic material and houses (1) an organizing means 132 including carrier plates (138a-i), each with an identical array of holes 140 (corresponding to the array of holes 23 in the organizing tray 21 of the tip rack 12) and each supporting an array (133a-i) of pipette tips 24, (2) the balance of the cover means 134 comprising a removable cover 142 and a push plate 144, and (3) a releasable means 136 releasably securing the organizing means 132 relative to the cover means 134.

In addition, a lower annular portion of the container 148 forms a skirt 160 for positioning and guiding the container over and onto the tip rack 12. As shown in Fig. 8, when the container 148 is positioned over the tip rack 12, the distal end portions 30 of a lowermost array 133a of pipette tips 24 extend into corresponding holes 23 in the organizing tray 21 of the fully loaded tip rack 12. The tip rack 12 is banded to the container 148 by a removable plastic sleeve (not shown) to complete a ready-for-shipment package.

When it is desired to use the pipette tips 24, the band is removed to separate the container 148 from the tip rack. The pipette tips 24 are then dispensed from the rack 12 in a conventional manner. When all the pipette tips have been dispensed from the rack, the container 148 is then nested over the now empty tip rack 12. When so positioned, actuation of the releasable means 136 releases the lowermost carrier plate 138a (corresponding in structure to the previously described support plate 26) containing the array 133a into the tip tray 21 thereby refilling the pipette tip rack 12. Once the rack 12 has dispensed the array 133a onto single or multiple-tip pipettes, the foregoing operation may be repeated to again refill the rack 12 with the next lowermost array 133b of pipette tips 24, and so on. In the dispensing of pipette tips from the tip rack 12, structural support for the carrier plates 138 is provided by the tip rack 12. For that reason, the carrier plates may be formed of a thin light weight semi-rigid plastic material which upon disposal represents a minimum of non-biodegradable waste.

More particularly as shown in Fig. 8, each of the plurality of horizontally oriented carrier plates 138a-i, has an array of holes 140 corresponding to the array of holes 23 in the organizing tray 21 of the tip rack 12. Each hole 140 receives a distal end portion 30 of a disposable pipette tip 24 which extends vertically downward therethrough with the proximal end portion 34 of the tip extending vertically upward therefrom. Thus, the carrier plates 138a-i position the arrays 133a-i of pipette tips 24 with each pipette tip 24 longitudinal axis in a vertical orientation. The plurality of carrier plates 138a-i are stacked in the container 148 with the distal end portions 30 of pipette tips 24 of the array 133i in the uppermost carrier plate 138i extending within the proximal end portions 34 of pipette tips 24 of the array 133h supported by the next lower carrier plate 138h and so down to the lowermost carrier plate. In such aa nesting arrangement for the pipette tips, the upper carrier plate 138i rests on top of the proximal end portions 34 of pipette tips 24 of the array 133h in the carrier plate 138h while the carrier plate 138h rests on top of the proximal end portions of the pipette tips 24 of the array 133g in the carrier plate 138g and so on down to the lowermost carrier plate. Thus arranged, the lowermost carrier plate 138a becomes a support plate 146 when it is positioned against the releasable means 136 for releasably restraining the support plate 146 relative to the cover means 134.

As illustrated, the cover means 134 comprises the container 148, the removable cover 142 and the push plate 144. The cover 142 encloses an open upper end 152 of the container 148 and covers the open upper end 18 of the tip rack 12 when it is separated from the refill pack 130. The push plate 144 resides in the container 148 at the upper open end 152 and rests on the proximal end portions 34 of the pipette tips 24 in the array 133i. When external downward force is applied to the push plate 144, it moves downward pressing against the uppermost array 133i of pipette tips 24 to transmit the force through the arrays 133a-h to the lowermost array 133a. Each carrier plate 138a-i sequentially moves downward, becoming the support plate 146 and is ejected by action of the indexed downward movement of the push plate 144 against the proximal end portion 34 of the array 133i of pipette tips 24 within the refill pack 130.

In the refill pack 130, the releasable means 136 is part of the four sided tubular container 148. As shown, the container 148 is dimensioned (i) to receive, support and transport the horizontal carrier plates 138a-i, each sequentially into position as the support plate 146 at a lower open end 150 of the container 148 and (ii) to receive the push plate 144 at the upper open end 152 of the container 148 after the removal of the cover 142. Opposing sides 154 of the tubular container 148 are essentially rectangular, parallel, vertically oriented and mutually attached at contiguous edges thereby enclosing an essentially rectangular volume. The sides 154 include vertically positioned and horizontally extending inward projections 156 for releasably supporting and positioning the support plate 146 marginal edges within the lower opening 150 of the container 148. Thus positioned, the support plate 146 places the distal end portions 30 of the lowermost array 138a of pipette tips 24 for protection within the lower end 150 of the container 148.

As shown in Fig. 9, additional inward projections 158 in corners of the sides 154 of the container 148, comprise horizontally separated series of triangular shaped ramps, spaced at equal intervals vertically above the support plate 146 so as to permit incremental downward movement of the push plate 144 and prevent an upward return movement thereof. As shown in Fig. 9, the inward projections 158 are positioned to constrain only the movement of the push plate 144 by contact with the corners thereof. As illustrated, bevelled corners of the carrier plates 138a-i do not permit the inward projections 158 to contact the peripheral edges of carrier plates 138a-i. The incremental downward movement of the push plate 144 thereby affects sequential releasing of the lowermost array 133a of pipette tips 24 contained in the support plate 146 to drop into the tip rack 12 and positioning the next lowermost carrier plate 138b as the support plate 146 for subsequent release. Release of the support plate 146 results from the downward pressure of the push plate 144 applied against the proximal end portions 34 of the uppermost array 133i of pipette tips 24 and thereby against the carrier plate 138i and thereafter through the arrays 133a-h of pipette tips and carrier plates 138b-h The downward pressure of the support plate 146 against the indentations 156 causes sides 154 to flex outward slightly, for releasing the support plate 146 into the tip rack below.

As shown in Fig. 8, the sides 154 also form the skirt 160 at the lower open end 150 of the container 148 for positioning, centering and guiding the refill pack 130 over the tip rack 12. The positioning provided by the skirt 160 is such that the distal end portions 30 of the lowermost array 133a of pipette tips 24 contained in the support plate 146, extend downward therefrom and are positioned for dispensing into the tip rack 12. At the lowermost edge of the skirt 160, the vertical sides 154 of the container 148 extend horizontally outwardly forming a continuous surrounding flange 162 for opening 150. When the container 148 is packaged separate from a fully loaded tip rack, the flange 162 provides for attachment of a sheet of lidstock as in Fig. 4 to protect the downward extending distal end portions 30 of the pipette tips 24. The lidstock may be attached to the flange 162 by adhesive, thermal bonding, or mechanical means.

In the embodiments of the present invention shown in Figs. 4-9, it is an important feature in dispensing the pipette tips from the refill packs that the arrays be dispensed one at a time. Further, when the refill packs are combined with pipette tip racks within a wrapped package, as previously described, it is important that the arrays of pipette tips be secure and not subject to excessive movement relative to their supporting housings. To achieve such important objectives, the dimensioning of the-refill packs relative to the tip racks is such that when an array of pipette tips is seated in the tip rack either by preloading as part of a combination package with a refill pack, or after a lowermost array of pipette tips has been dispensed from a refill pack into a previously empty tip rack, the pipette tips in the tip rack and the supporting tip rack tray form a hard stop for the stacks of arrays of pipette tips above the tip rack preventing downward movement of the stacked arrays. In the embodiments of Fig. 4 and 6, the vertical stacking of the pipette tips is such that an outer surface of the proximal end portions of each tip (except a lowermost tip) bears on and is supported by an upper end of the proximal end portion of a next lower tip. Thus, when the pipette tips supported on a tip rack tray and the tray establish a hard stop, a downward force on the vertical stacks will not produce a corresponding downward movement or a dispensing of an array of pipette tips by the refill pack. Likewise, in the embodiment of Figs. 8 and 9, the carrier plates 138b-i each rest on a top of a proximal end portion of a next lower array of pipette tips and the carrier plate 138a rests on top of the pipette tips supported by the tip rack tray. Thus, when the pipette tips supported by the tray and the tray combine to form a hard stop, a downward force on the vertical stacks will not produce a corresponding downward movement or a dispensing of an array of tips by the refill pack. In these regards, in Figs. 6 and 8, for purposes of clarity in illustrating the support plates, the bottom of the support plates are shown spaced from the tops of the proximal end portions of the pipette tips supported by the tip rack. To prevent inadvertent downward movement of the stacked arrays of pipette tips relative to the array of tips in the rack, the dimensioning of the refill packs is such that the tip of the proximal end portions of the tips in the tip rack engage or are very closely spaced from the under surface of the support plates to combine with the tip rack tray to provide the desired hard stop.

A final and simplified single array refill pack 200 is depicted in Figs. 10a, b and c. As shown in Fig. 10a, the refill pack 200 comprises the previously described basic combination of (1) a semi-rigid support plate 202 with an array of holes 203 carrying an array of pipette tips 204, and (2) a thin flexible hand-holdable positioning and guide means 206 for hand moving the support plate 202 over an open top of an empty tip rack 208, as shown in Fig. 13c, and for separating from the support plate for dispensing the support plate and array of tips into the tip rack. To simplify the placement of the refill pack 200 over the tip rack 208, the guide means 206 includes a tubular skirt 210 extending downward beyond the distal ends of the pipette tips carried by the support plate 202. The skirt is dimensioned to closely receive the top of the tip rack with inner surfaces of the skirt engaging the side support members of the tip rack to center the support plate and the pipette tips over the tip rack and to slide downward along the side support members as the skirt is lowered onto the tip rack to the position shown in Fig. 10c.

More particularly, the guide means 206 comprises a hand-holdable sleeve 212 surrounding and releasably securing marginal edges of the support plate 202. Preferably, the sleeve is formed by a band of flexible material having its opposite ends secured by latching means 214. The band is formed with a longitudinally extending channel 216 near the middle thereof such that when the band is wrapped around the support plate 202, the marginal edges of the support plate fit securely into the channel, defining a channel for releasably securing the support plate. The band also is formed along it upper edge in a longitudinally extending channel 218 which when the band is wrapped around the support plate defines an upper channel for receiving a removable cover 220 for the refill pack.

Fig. 10b depicts the refill pack 200 with the cover removed and illustrates the array of holes 203 in the support plate 202 as well as the releasable latching means 214. As shown, the latching means 214 comprises a releasable connection between the opposite ends of the band and a tab 222 extending from the outermost end of the band as wrapped around the support plate.

In use, the refill pack 200 is picked up by a user grasping the sleeve 212. The user moves the refill pack over the empty tip rack with the skirt receiving the top of the rack. The user then lowers the sleeve while the skirt guides the support onto the tip rack and the distal end portions of the pipette tips into the holes in the organizing tray of the rack. Then, grasping the tab 222, the user pulls on the sleeve to release the latching means and separate the sleeve. This allows the top cover and the sleeve to separate from the support plate and the support plate and array of pipette tips to seat on the organizing tray to refill the tip rack.

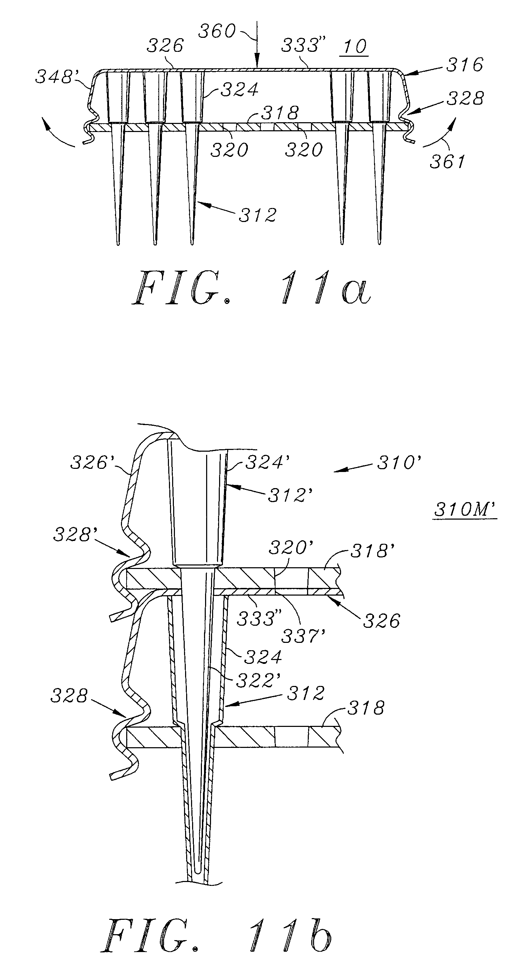

As previously mentioned, Figs. 11a and 11b depict preferred embodiments a single and a multiple array pipette tip refill pack of the present invention. As with refill packs previously described, the single array refill pack 310 of Fig. 14a comprises (1) the horizontally oriented support plate 318 with an array of holes 320 for supporting pipette tips 312 (including filter containing tips) with their longitudinal axes vertically oriented and (2) a hand-holdable carrier 316 comprising a cover 326 for confining the proximal end portions 324 of the array of pipette tips 312. In addition, the cover 316 comprises a releasable latching means 328 for releasably securing the support plate 318 relative to the cover 326.

More particularly, the cover 326 of Fig. 11a comprises a shallow container of light-weight thin flexible plastic material. As shown, the container includes a horizontally oriented semi-rigid inwardly flexible rectangular cover or alignment plate 333'' with outwardly flexible continuous side members 348' including the releasable latching means 328 for the support plate 318. In this regard, spaced slightly from an open bottom of the container comprising the cover 326, the continuous side members 348' include a continuous "S" shaped section defining a horizontal channel for receiving and releasably gripping marginal edges of the support plate 318. With the support plate 318 secured within the container, the cover plate 333'' is vertically displaced from the support plate by a dimension substantially equal to or slightly greater than the length of the proximal end portions 324 of pipette tips 312, thereby containing the proximal end portions between the cover plate and the support plate ready for dispensing from the refill rack 310.

Thus, in use, a user of the refill pack 310 of Fig. 11a grasps the container (comprising the cover 326 and carrier 316) and moves the open bottom of the container over the top of an empty tip rack with the distal end portions of the pipette tips extending into the rack. Then, as indicated by the arrows 360 and 361, he either presses downwardly on the top of the alignment plate 333'' or outwardly on the side members 348' to release the latching means 328 defined by the channel in the side members and allows the support plate to separate from the container and deposit with the array of pipette tips 12 into the tip rack. The container may then be recycled for future use.

As shown in Fig. 11b, the refill pack of Fig. 14a may be modified to accommodate a stacking of similar refill packs 310 and 310' with a nesting of arrays of conventional pipette tips into a space saving package. To accomplish such stacking, the alignment plate 333'' may include an array of holes 337', preferably corresponding to the array of holes 320 in the support plate 318. As shown, the holes 337' are dimensioned such that when a second refill pack 310' is stacked on the refill pack 310, the support plate 318' of the second refill pack rests on a top of the container comprising the cover 326 for the first refill pack. Thus arranged, corresponding ones of the distal end portions 322' of the array of pipette tips 312' carried by the support plate 318' extend through corresponding ones of the holes 337' and nest into corresponding proximal and distal end portions of corresponding ones of the pipette tips 312 to form a multiple array refill pack 310M'.

As with the single array refill pack 310 of Fig. 11a, the multiple array refill pack 310M' of Fig. 14b may be separately shrink wrapped or closed for shipping and storage in a thin plastic pouch or cardboard box. Thus, in use, the refill pack is first removed from the shrink wrap, pouch or box. Then, the user grasps the cover of the uppermost refill pack and lifts the pack from the stack. He then moves the refill pack over the top of an empty tip rack and dispenses the support plate and array of pipette tips from the cover in the manner previously described for the single array refill pack of Fig. 11a.

Another simplified single array refill pack is depicted in Figs. 12a and 12b, while Fig. 13 depicts a multiple array refill pack comprising a stack of single array refill packs similar to those of Fig. 12a. As shown in Fig. 12a, the single array refill pack comprises the previously described basic combination of (1) a support plate 318 with an array of holes carrying an array of pipette tips 312 (including filter containing pipette tips), and (2) a hand-holdable carrier 316 for hand moving the support plate over an open top of an empty tip rack and for separating from and dispensing the support plate and the array of pipette tips into the rack. In the embodiment shown in Fig. 12a, the carrier 316 comprises a hand-holdable sleeve 362 surrounding and releasably securing marginal edges of the support plate 318. Preferably, the sleeve 362 is formed by a band 364 of flexible material having its opposite ends releasably secured by latching means 366. The band 364 is formed with a longitudinally extending channel adjacent 368 its lower edge such that when the band is wrapped around the support plate 318, the marginal edges of the support plate fit securely into the channel, defining a lower channel for releasably securing the support plate. The band also is formed along its upper edge with a longitudinally extending channel 370 which when the band is wrapped around the support plate defines an upper channel for receiving a removable top cover 372 for the refill pack.

Fig. 12b depicts the refill pack of Fig. 12a with the cover 372 removed and illustrates the array of holes 320 in the support plate 318 as well as the releasable latching means 366. As shown, the latching means 66 comprises a releasable connection between the opposite ends of the band 64 and a tab 374 extending from the outermost end of the band as wrapped around the support plate.

In use, the refill pack of Figs. 12a and 12b is picked up by the user grasping the sleeve 362. The user moves the refill pack over an empty tip rack and positions the distal end portions of the array of pipette tips 312 in the tip rack. Then, grasping the tab 374, the user pulls on the band to release the latching means and separate the sleeve. This allows the top cover and the sleeve 362 to separate from the support plate 318 and the support plate and array of pipette tips 312 to seat in the tip rack.

As shown in Fig. 13, the basic refill pack of Fig. 12a may be modified to accommodate stacking of similar refill packs with a nesting of arrays of conventional pipette tips into a space saving package. To accomplish such stacking, the lowermost edge portion of the sleeve 362 of each refill pack is bent slightly outward and vertically downward to define an annular horizontal shoulder 376. Also, the upper edge portion of the sleeve is bent to extend vertically such that the lower open end of an upper sleeve will fit over an upper end of a lower sleeve. Thus positioned, the lateral shoulder 376 will rest upon a top edge of a lower sleeve as shown in Fig. 13. Accordingly, a stack of modified refill packs as shown in Fig. 13 will comprise a plurality of refill packs with the all but the bottom sleeve stacked such that the lower end of each sleeve rests on the top edge of the next lower sleeve and the distal end portion of each array of pipette tips nests into the proximal end portions of the next lower array. As illustrated, the bottom sleeve rests on a top edge of a bottom support container 378 for the stack and a top cover 380 snaps over the top edge of the sleeve of the upper refill rack to complete the stack. The stack of refill pack shown in Fig. 13 thus defines a self-contained package for storage. Of course, if desired, the package may be shrink wrapped or otherwise contained in another carton or container for shipping and storage.

From the foregoing description of the various preferred embodiments illustrated in the drawings, it should be appreciated that the present invention may take many various forms and that the invention is to be limited only by the following claims.

## Claims

1. A refill pack (70) for an empty pipette tip rack (12, 84), the refill pack including a hand holdable pipette tip positioning means (35, 90) for releasably holding a plurality of pipette tips (24) and for positioning distal ends of the pipette tips in holes (23) in a rigid horizontally extending pipette tip organising tray (21, 86)) of the pipette tip rack, wherein the refill pack (70) includes a support plate (74) supported by the positioning means (35, 90) and including a plurality of enlargeable openings (76) comprising releasable means (82) for releasably supporting the pipette tips (24) and for enlarging in response to a downward force on the pipette tips (24) to dispense the pipette tips through the enlargeable openings (76) in the support plate (74) into the holes (23) in the organising tray (21, 86) in the empty tip rack (21, 84).

2. The refill pack of claim 1 wherein the releasable means further comprises a push plate (80) over the pipette tips (24) for exerting the downward force on the pipette tips.

3. The refill pack of claim 1 wherein:
the positioning means (35, 90) is formed of a light weight, low mass material and includes vertically extending sides (96) forming a tubular housing (90) terminating in an open bottom (92) receiving the support plate (74) and the array of pipette tips (24) for centering the array over an empty pipette tip rack (84) with distal end portions of the pipette tips vertically positioned in and through an array of holes in an organizing tray (86) in the empty tip rack (84), and
the releasable means (82) comprises enlargable means (108) in the openings (76) in the support plate (74) for enlarging to release the array of pipette tips (24) through the holes in the support plate in response to the downward force on the array of pipette tips.

4. The refill pack of claim 3 further including push means (80) for exerting the downward force on the array of pipette tips (24).

5. The refill pack of claim 4 wherein:
the array of pipette tips (24) comprises an array of horizontally spaced vertical stacks of tips, each stack containing a plurality of pipette tips with all but a lowermost one of the tips telescoping into a next lower tip in the stack and the lowermost tip in each stack extending into a different hole (76) in the support plate (74) for support thereby;
the push means (80) comprises a push plate engaging an uppermost one of the pipette tips in each of the vertical stacks, the lowermost ones of pipette tips in the vertical stacks comprising pipette tips extending through the holes (76) in the support plate (74) for extending into the organizing tray (86) of the empty pipette tip rack (84) when the support plate is placed there over; and
the tubular housing (90) is dimensioned to (i) receive and horizontally support the support plate (74) in the housing with the vertical stacks of pipette tips therein and (ii) receive the push plate (80) at an open upper end of the housing with sidewalls of the housing supporting the push plate for downward movement into the housing to effect a sequential release of lowermost pipette tips in the vertical stacks into the empty pipette rack.

6. The refill pack of claim 5 wherein the support plate (74) includes moveable means (108) extending into the holes (76) to define enlargable openings for receiving and holding the lowermost pipette tips of the vertical stacks and for enlarging to receive and pass the lowermost pipette tips as the tips move downward with movement of the push plate (80) for release from the refill pack into the empty pipette tip rack.

7. The refill pack of claim 6 wherein the housing (90) includes vertically spaced detent means (98) along opposing inner walls thereof for allowing downward movement of the push plate (80) into the housing and for preventing upward return movement of the push plate in the housing.

8. The refill pack of claim 6 wherein the push plate (80) carries a plurality of spaced pipette tip indexing means (110) fitting into proximal ends of the uppermost pipette tips in the vertical stacks for maintaining the vertical stacks vertically aligned within the housing (90) as the push plate (80) is moved downwardly within the housing to successively release lowermost ones of pipette tips into the empty pipette tip rack (84) through the enlargable openings (76) in the support plate (74).

9. The refill pack of claim 1 wherein:
the positioning means (35) comprises a pipette organizing and support plate (74) of light weight semi-rigid material having an array of holes therethrough, each hole in the support plate receiving a distal end portion of a pipette tip (24) to vertically support and organize an array of pipette tips;
the array of pipette tips (24) comprises an array of horizontally spaced vertical stacks of pipettes, each stack containing a plurality of pipette tips with all but a lowermost one of the tips telescoping into a next lower tip in the stack and the lowermost tip in each stack extending into a different hole in the support plate for, support thereby with a distal end portion of the lowermost tip extending below the support plate and the proximal end portion of the lowermost tip extending above the support plate;
the positioning means (35) further comprises a tubular housing (90) horizontally supporting the support plate (74) adjacent a lower open end (92) thereof to vertically confine and protect the stacks of pipette tips; and
wherein the refill pack further comprises:
a horizontally extending push plate (80) in the open upper end (92) of the housing and supported for downward movement into the housing to engage an uppermost end of a proximal end portion of an uppermost one of the pipette tips in each of the stacks; and
moveable means (108) extending into the holes of the support plate (74) and defining the enlargable openings (76) for receiving and holding the distal end portions of the lowermost pipette tips and for enlarging to receive and pass the proximal end portions of the lowermost pipette tips in response to downward movement of the push plate (80) into the housing to release the lowermost pipette tips from the refill pack to refill the tip rack.

10. The refill pack of claim 9 wherein the tubular housing (90) comprises a skirt (102) at a lower end below the support plate (74) for centering and guiding the housing onto the empty pipette tip rack (84) with the distal end portion of the lowermost tip in each stack aligned with a corresponding hole in the organizing tray (86) of the tip rack to vertically seat therein upon a lowering of the housing onto the tip rack.

11. A refill pack (10) for an empty pipette tip rack (12), the refill pack comprising a horizontally extending support (22) including an array of holes (28) for receiving and organizing an array (32) of pipette tips (24) with proximal end portions (34) above the support and with distal end portions (30) below the support to extend into a matching array of holes (23) in a rigid horizontally extending organizing tray (21) of the rack (12), and hand-holdable positioning means (35) formed of a light weight, low mass material and including vertically extending sides (40, 154) terminating in an open bottom (50) receiving the support (22) and the array of pipette tips (24) for centering the array of pipette tips over the empty pipette tip rack (12) with the distal ends of the tips vertically positioned in and through the array of holes (23) in the organizing tray (21), wherein
the support (22) comprises a separate support plate (26, 146); and,
releasable means (42, 136) for (i) releasably securing the support plate and the array of pipette tips (24) within the open bottom (50, 150) of the positioning means (35) and (ii) actuation by a user to release the support plate and the array of pipette tips from the positioning means downward through the open bottom (50, 150) into the holes in the organizing tray of the empty pipette tip rack.

12. The refill pack of claim 11 wherein the positioning means includes a tubular support portion releasable receiving and horizontally supporting the support plate (26) with the distal end portions of the array of pipette tips (24), extending through the holes in the support plate.

13. The refill pack of claim 12 wherein the positioning means (35) further includes hand-holdable lower sidewall members extending vertically downward from the tubular support portion beyond the distal end portions of the pipette tips to form a guide (27) having an open bottom below the distal end portions of the pipette tips and dimensioned to closely receive a top of the empty pipette tip rack with the sidewall members of the guide sliding downwardly along the side support members of the rack to guide the refill pack (10) onto the empty pipette tip rack (12) with the distal end portions of the pipette tips (24) aligned vertically over and extending vertically into the holes (23) in the organizing tray (21) of the tip rack.

14. The refill pack of claim 11 wherein:
the hand-holdable positioning means comprises cover means (36) including a top (38) an open bottom (50) and the contiguous sidewall members (40) extending from the top and horizontally supporting the support plate to confine and protect the proximal end portions of the pipette tips; and
the releasable means (42) includes means on the sidewall members (i) for releasably securing the support plate (26) relative to the cover means (36) and (ii) for actuation by a user to release the support plate and the array of pipette tips from the cover means downward through the open bottom (50) into the holes (23) in the organizing tray (21) when the support plate is positioned over the empty pipette tip rack (12) with the distal end portions of the pipette tips extending into the empty pipette tip rack to effect a refilling of the empty pipette tip rack.

15. The refill pack of claim 14 wherein the contiguous sidewall members (40) combine to form an open bottom skirt means (27) extending beyond the distal end portions of the pipette tips (24) for receiving the top of the empty pipette tip rack and for guiding the cover means (36) downward over the empty pipette tip rack (12) with the distal end portions of the pipette tips aligned with the holes (23) in the organizing tray (21) of the empty pipette tip rack.

16. The refill pack of claim 14 wherein the cover means (36) and the releasable means (42) comprise a flexible plastic cover having an inwardly flexible top (38) over the proximal ends of the pipette tips (24) and the open bottom (50) is defined by outwardly flexible sidewall members (40) extending from the top to surround and releasably engage and secure the support plate (26) within the cover, whereby an inward force on the top will inwardly flex the top to press on the proximal ends of the pipette tips and will outwardly flex the sidewall members to release the support plate and array of tips through the open bottom of the cover and into the empty pipette tip rack.

17. The refill pack of claim 14 wherein:
the top (30) of the cover means (36) is separate from the contiguous sidewall members which form a tubular housing (148) having an open top (152) and an open bottom (150);
the separate top extending horizontally within the open top of the housing and being manually moveable as a downward push plate (144) within the housing to effect actuation of the releasable means (136) and a dispensing of the array of pipette tips (24) into the empty pipette tip rack.

18. The refill pack of claim 17 further comprising lower portions of the tubular housing (148) forming a skirt (160) for guiding the housing onto the top of the empty pipette tip rack during a reloading thereof.

19. The refill pack of claims 17 or 18 wherein the releasable means (136) includes guide means for movement of the push plate (144) toward the support plate (146) to effect a release of the pipette tips from the refill pack into the empty pipette tip rack.

20. The refill pack of claim 14 wherein the releasable means (136) is between the support plate (146) and the sidewall members (154) of the cover means.

21. The refill pack of claim 17 wherein:
the array of pipette tips (24) comprises a plurality of vertically separated arrays of pipette tips, the pipette tips in all but a lowermost one of the arrays telescoping into the pipette tips of the next lower array; and
the refill pack further comprises pipette tips carrier plates (138) for carrying each vertically separated array of pipette tips, each carrier plate (138) extending horizontally within the housing (148) with distal end portions of the pipette tips carried thereby extending through holes in the carrier plate and with proximal end portions of the pipette tips carried thereby extending vertically above the carrier plate, whereby the support plate (26, 146) and sequentially thereafter the carrier plate carrying the lowermost one of the arrays of pipette tips (24) are successively ejected with the lowermost array of pipette tips from the housing upon a downward movement of the push plate (144) within the housing.

22. The refill pack of claim 21 wherein the housing (148) includes vertically spaced detents (158) along opposing inner walls thereof for allowing stepped downward movement of the push plate into the housing.

23. The refill pack of claim 11 wherein:
the positioning means (35) comprises a container (36) of light weight low mass material having a closed horizontally extending inwardly flexible top (38) and contiguous, outwardly flexible sidewalls (40) extending vertically from the closed top of the container with support plate support means (44) on opposing ones of the sidewalls, the support plate (26) being dimensioned to extend within the container for horizontal support such than ends of the proximal end portions of the pipette tips are adjacent the closed top of the container and ends of the distal end portions of the pipette tips are above the open bottom of the container whereby the proximal end portions of the pipette tips are protected by the support plate and the closed top and sidewalls of the container above the support means and whereby a positioning of the support plate over the empty pipette tip rack (12) aligns the distal end portions of the pipette tips (24) with holes (23) in the organizing tray (21) of the empty pipette tip rack, the holes matching at least a portion of the array of openings (28) in the support plate (26) and an inwardly flexing of the closed top of the container outwardly flexes the sidewalls (40) to release the support plate through the open bottom of the container onto the organizing tray of the empty pipette tip rack with the distal end portions of the tips passing into the array of holes in the tray to refill the empty pipette tip rack.

24. The refill pack of claim 23 wherein the container (36) further comprises lower sidewall portions below the support means forming a downwardly extending open bottom tubular skirt (27) for guiding the container onto the tip rack (12) with the lower sidewall portions moving along the side support members of the rack and the distal end portions of the pipette tips protected by the skirt.

25. The refill pack of claim 11 wherein
the refill pack further comprises a plurality of carrier plates (138) of light weight semi-rigid material each having an array of holes therethrough corresponding to the array of holes in the support plate (146) each hole in each carrier plate (138) being structured to receive a distal end portion of a pipette tip to vertical support and horizontally organize an array of pipette tips;
the plurality Of pipette tips (24) comprises a plurality of arrays (133) of pipette tips, the pipette tips in a first array (133a) having distal end portions extending vertically through the holes in the support plate (146) for support thereby and proximal end portions extending vertically above the holes in the support plate (146) for support thereby, the pipette tips in a second array (133b) having distal end portions extending through the holes in a lower one of the carrier plates (138b) resting on the proximal ends of the pipette tips in the first array supported on the support plate and telescoping into the distal end portions of the tips in the first array (133a) and having proximal end portions extending above the lower carrier plate (138b), the pipette tips in a third array (133c) having distal end portions extending through the holes in a next lower one of the carrier plates (138c) resting on the proximal ends of the pipette tips in the second array supported on the lowermost carrier plate and telescoping into the distal end portions of the tips in the second array and having proximal end portions extending above the next lower carrier plate (138c), and so on for each of the other arrays of pipette tips and carrier plates to define a stack of arrays of pipette tips and carrier plates;
the positioning means further comprises a tubular housing (148) for receiving the stack of arrays of pipette tips and carrier plates and including support means (156) for releasably and horizontally supporting the support plate adjacent a lower open end thereof; and
the refill pack further comprises a horizontally extending push plate (144) in an open upper end of the housing (148) and supported for downward movement into the housing to engage the proximal end portions of an uppermost one of the arrays of pipette tips, whereby the support plate and sequentially thereafter the carrier plate carrying a lowermost one of the arrays of pipette tips is successively ejected from the housing upon a downward movement of the push plate within the housing.

26. The refill pack of claim 25 wherein the tubular housing (148) comprises a skirt (160) at a lower end below the support means for centering and guiding the housing onto the empty pipette tip rack (12) with the distal end portions of the first array of pipette tips aligned with corresponding holes (23) in the organizing tray (21) of the tip rack.

27. The refill pack of claim 11 wherein the positioning means comprises a sleeve (206, 362) releasably receiving and surrounding the support plate (202, 318).

28. The refill pack of claim 27 wherein the sleeve (206, 362) comprises a band of flexible material having opposite ends secured by releasable latching means (214, 366).

29. The refill pack of claim 28 wherein the band includes a longitudinally extending lower channel (216, 368) for receiving a marginal edge of the support plate (202, 318) to releasably secure the support plate within the sleeve defined by the band as it wraps around and surrounds the support plate.

30. The refill pack of claim 29 wherein the band includes an upper channel (370) for receiving a marginal edge of a top cover (372) to releasable secure the top cover of the proximal ends of the array of the pipette tips carried by the support piece.

31. The refill pack of claim 27 wherein:
the support plate (318) comprises a first support plate,
the array of pipette tips (312) comprises a first array of pipette tips
and the hand-holdable sleeve (362) comprises a first hand-holdable sleeve and
the refill pack further includes:
a second support plate (318') resting on the proximal ends portion of the first array of pipette tips and having an array of holes (320') there through for each receiving a distal end portion of a pipette tip to vertical support and organize a second array of pipette tips;
a second array of pipette tips (312') with distal end portions extending vertically through the holes in the second support plate to nest in corresponding ones of the pipette tips of the first array with proximal end portions extending vertically above the second support plate; and
a second hand-holdable sleeve (326') releasable receiving and surrounding the second support plate.

32. The refill pack of claim 31 further including a lid (380) releasably secured to a top of the second hand-holdable sleeve to cover the proximal end portions of the second array of pipette tips.

33. The refill pack of claim 11 wherein:
the positioning means comprises a cover (326) for confining the proximal end portions of the pipette tips in combination with the support plate, the cover comprising a flexible plastic cover having an inwardly flexible top over the proximal ends of the pipette tips (324) and an open bottom defined outwardly flexible sides (348') extending from the top to surround and releasably engage and secure the support plate (318) within the cover, whereby an inward force on the top will inwardly flex the top to press on the proximal ends of the pipette tips or an outward force on the sides will outwardly flex the sides to release the support structure and array of tips through the open bottom of the cover;
the support plate (318) comprises a first support plate;
the array of pipette tips (324) comprises a first array of pipette tips; and
the top of the cover includes an array of holes (337') corresponding to the array of holes in the first support plate for receiving end portions of a second array of pipette tips (312') carried by a second support plate (318') for nesting of the first and second arrays of pipette tips and a stacking of a second refill pack thereon.

## Patentansprüche

1. Nachfüllpack (70) für ein leeres Pipettenspitzengestell (12, 84), wobei der Nachfüllpack ein in der Hand haltbares Pipettenspitzenpositioniermittel (35, 90) umfaßt, um eine Vielzahl von Pipettenspitzen (24) freigebbar zu halten und um distale Enden der Pipettenspitzen in Löcher (23) in einer starren, sich horizontal erstreckenden Pipettenspitzenorganisierschale (21, 86) des Pipettenspitzengestells zu positionieren, wobei der Nachfüllpack (70) eine Trägerplatte (74) aufweist, die von dem Positioniermittel (35, 90) getragen ist und eine Vielzahl von erweiterbaren Öffnungen (76) aufweist, die ein freigebbares Mittel (82) umfassen, um die Pipettenspitzen freigebbar zu tragen und sich in Ansprechen auf eine Kraft nach unten auf die Pipettenspitzen (24) zu erweitern, um die Pipettenspitzen (24) durch die erweiterbaren Öffnungen (76) in der Trägerplatte (74) in die Löcher (23) in der Organisierschale (21, 86) in dem leeren Spitzengestell (21, 84) abzugeben.

2. Nachfüllpack nach Anspruch 1, wobei das freigebbare Mittel ferner eine Druckplatte (80) über den Pipettenspitzen (24) umfaßt, um eine Kraft nach unten auf die Pipettenspitzen auszuüben.

3. Nachfüllpack nach Anspruch 1, wobei
das Positioniermittel (35, 90) aus leichtem Material mit niedriger Masse gebildet ist und sich vertikal erstreckende Seiten (96) umfaßt,
die ein rohrförmiges Gehäuse (90) bilden, das in einem offenen Boden (92) endet, der die Trägerplatte (74) und die Anordnung von Pipettenspitzen (24) aufnimmt, um die Anordnung über einem leeren Pipettenspitzengestell (84) zu zentrieren, wobei distale Endteile der Pipettenspitzen vertikal in und durch eine Anordnung von Löchern in einer Organisierschale (86) in dem leeren Spitzengestell (84) positioniert sind, und
das freigebbare Mittel (82) ein erweiterbares Mittel (108) in den Öffnungen (76) in der Trägerplatte (74) umfaßt, um sich zu erweitern und somit die Anordnung von Pipettenspitzen (24) durch die Löcher in der Trägerplatte in Ansprechen auf die Kraft nach unten auf die Anordnung von Pipettenspitzen freizugeben.

4. Nachfüllpack nach Anspruch 3, der ferner ein Druckmittel (80) umfaßt, um die Kraft nach unten auf die Anordnung von Pipettenspitzen (24) auszuüben.

5. Nachfüllpack nach Anspruch 4, wobei
die Anordnung von Pipettenspitzen (24) eine Anordnung von horizontal beabstandeten, vertikalen Spitzenstapeln umfaßt, wobei jeder Stapel eine Vielzahl von Pipettenspitzen enthält, wobei alle bis auf eine unterste der Spitzen in eine nächst tiefere Spitze in dem Stapel eingeschoben sind, und die unterste Spitze in jedem Stapel sich in ein unterschiedliches Loch (76) in der Trägerplatte (74) zur Unterstützung dadurch erstreckt.
das Druckmittel (80) eine Druckplatte umfaßt, die mit einer obersten der Pipettenspitzen in jedem der vertikalen Stapel in Eingriff steht, wobei die untersten der Pipettenspitzen in den vertikalen Stapeln Pipettenspitzen umfassen, die sich durch die Löcher (76) in der Trägerplatte (74) erstrecken, um sich in die Organisierschale (86) des leeren Pipettenspitzengestells (84) zu erstrecken, wenn die Trägerplatte darüber gesetzt ist, und
das rohrförmige Gehäuse (90) dimensioniert ist, um (i) die Trägerplatte (74) in dem Gehäuse mit den vertikalen Stapeln von Pipettenspitzen darin aufzunehmen und horizontal zu tragen, und (ii) die Druckplatte (80) an einem offenen, oberen Ende des Gehäuses aufzunehmen, wobei die Seitenwände des Gehäuses die Druckplatte für eine Bewegung nach unten in das Gehäuse tragen, um ein aufeinanderfolgendes Freigeben der untersten Pipettenspitzen in den vertikalen Stapeln in das leere Pipettengestell zu bewirken.

6. Nachfüllpack nach Anspruch 5, wobei die Trägerplatte (74) bewegbare Mittel (108) umfaßt, die sich in die Löcher (76) erstrecken, so daß sie erweiterbare Öffnungen definieren, um die untersten Pipettenspitzen der vertikalen Stapel aufzunehmen und zu halten und um sich zu erweitern und somit die untersten Pipettenspitzen aufzunehmen und weiterzugeben, während die Spitzen sich mit einer Bewegung der Druckplatte (80) nach unten bewegen, um diese aus dem Nachfüllpack in das leere Pipettenspitzengestell freizugeben.

7. Nachfüllpack nach Anspruch 6, wobei das Gehäuse (90) vertikal beabstandete Feststellmittel (98) entlang von dessen gegenüberliegenden Innenwänden umfaßt, um eine Bewegung der Druckplatte (80) nach unten in das Gehäuse zuzulassen und um eine Rückbewegung der Druckplatte nach oben in das Gehäuse zu verhindern.

8. Nachfüllpack nach Anspruch 6, wobei die Druckplatte (80) eine Vielzahl von beabstandeten Pipettenspitzenindexiermitteln (110) stützt, die in proximale Enden der obersten Pipettenspitzen in den vertikalen Stapeln passen, um die vertikalen Stapel innerhalb des Gehäuses (90) vertikal ausgerichtet zu halten, während die Druckplatte (80) innerhalb des Gehäuses nach unten bewegt wird, um nacheinander unterste der Pipettenspitzen in das leere Pipettenspitzengestell (84) durch die erweiterbaren Öffnungen (76) in der Trägerplatte (74) freizugeben.

9. Nachfüllpack nach Anspruch 1, wobei
das Positioniermittel (35) eine Pipettenorganisier- und -trägerplatte (74) aus leichtem, halbstarrem Material umfaßt, durch die hindurch eine Anordnung von Löchern vorgesehen ist, wobei jedes Loch in der Trägerplatte einen distalen Endteil einer Pipettenspitze (24) aufnimmt, um eine Anordnung von Pipettenspitzen vertikal zu tragen und zu organisieren,
die Anordnung von Pipettenspitzen (24) eine Anordnung von horizontal beabstandeten, vertikalen Pipettenstapeln umfaßt, wobei jeder Stapel eine Vielzahl von Pipettenspitzen enthält, die alle bis auf eine unterste der Spitzen in eine nächst tiefere Spitze in dem Stapel eingeschoben sind, und die unterste Spitze in jedem Stapel sich in ein unterschiedliches Loch in der Trägerplatte zur Unterstützung dadurch erstreckt, wobei ein distaler Endteil der untersten Spitze sich unter der Trägerplatte erstreckt und der proximale Endteil der untersten Spitze sich über der Trägerplatte erstreckt,
das Positioniermittel (35) ferner ein rohrförmiges Gehäuse (90) umfaßt, das die Trägerplatte (74) benachbart zu dessen unterem offenen Ende (92) horizontal trägt, um die Pipettenspitzenstapel vertikal zu begrenzen und zu schützen, und
wobei der Nachfüllpack ferner umfaßt:
eine sich horizontal erstreckende Druckplatte (80) in dem offenen oberen Ende (92) des Gehäuses, die für eine Bewegung nach unten in das Gehäuse getragen ist, um mit einem obersten Ende eines proximalen Endteils einer obersten der Pipettenspitzen in jedem der Stapel in Eingriff zu stehen, und
bewegbare Mittel (108), die sich in die Löcher der Trägerplatte (74) erstrecken und die erweiterbaren Öffnungen (76) definieren, um die distalen Endteile der untersten Pipettenspitzen aufzunehmen und zu halten, und um sich zu erweitern, um die proximalen Endteile der untersten Pipettenspitzen in Ansprechen auf eine Bewegung der Druckplatte (80) nach unten in das Gehäuse aufzunehmen und weiterzugeben und somit die untersten Pipettenspitzen aus dem Nachfüllpack freizugeben, um das Spitzengestell nachzufüllen.

10. Nachfüllpack nach Anspruch 9, wobei das rohrförmige Gehäuse (90) eine Einfassung (102) an einem unteren Ende unter der Trägerplatte (74) umfaßt, um das Gehäuse auf das leere Pipettenspitzengestell (84) zu zentrieren und zu führen, wobei der distale Endteil der untersten Spitze in jedem Stapel mit einem entsprechenden Loch in der Organisierschale (86) des Spitzengestells ausgerichtet ist, um bei einem Absenken des Gehäuses auf das Spitzengestell vertikal in diesem zu sitzen.

11. Nachfüllpack (10) für ein leeres Pipettenspitzengestell (12), wobei der Nachfüllpack einen sich horizontal erstreckenden Träger (22) umfaßt, der eine Anordnung von Löchern (28) aufweist, um eine Anordnung (32) von Pipettenspitzen (24) aufzunehmen und zu organisieren, wobei sich proximale Endteile (34) über dem Träger befinden, und wobei sich distale Endteile (30) unter dem Träger befinden, um sich in eine dazu passende Anordnung von Löchern (23) in einer starren, sich horizontal erstreckenden Organisierschale (21) des Gestells (12) zu erstrecken, und ein in der Hand haltbares Positioniermittel (35) umfaßt, das aus einem leichten Material mit niedriger Masse gebildet ist und sich vertikal erstreckende Seiten (40, 154) umfaßt, die in einem offenen Boden (50) enden, der den Träger (22) und die Anordnung von Pipettenspitzen (24) aufnimmt, um die Anordnung von Pipettenspitzen über dem leeren Pipettenspitzengestell (12) zu zentrieren, wobei die distalen Enden der Spitzen vertikal in und durch die Anordnung von Löchern (23) in der Organisierschale (21) positioniert sind, wobei
der Träger (22) eine separate Trägerplatte (26, 146) umfaßt, und
freigebbare Mittel (42, 136) umfaßt, um (i) die Trägerplatte und die Anordnung von Pipettenspitzen innerhalb des offenen Bodens (50, 150) des Positioniermittels (35) freigebbar zu befestigen, und (ii) um von einem Benutzer betätigt zu werden, um die Trägerplatte und die Anordnung von Pipettenspitzen von dem Positioniermittel nach unten durch den offenen Boden (50, 150) in die Löcher in der Organisierschale des leeren Pipettenspitzengestells freizugeben.

12. Nachfüllpack nach Anspruch 11, wobei das Positioniermittel einen rohrförmigen Trägerteil umfaßt, der die Trägerplatte (26) freigebbar aufnimmt und horizontal trägt, wobei die distalen Endteile der Anordnung von Pipettenspitzen (24) sich durch die Löcher in der Trägerplatte erstrecken.

13. Nachfüllpack nach Anspruch 12, wobei das Positioniermittel (35) ferner in der Hand haltbare untere Seitenwandelemente umfaßt, die sich vertikal von dem rohrförmigen Trägerteil nach unten über die distalen Endteile der Pipettenspitzen hinaus erstrecken, um eine Führung (27) zu bilden, die einen offenen Boden unter den distalen Endteilen der Pipettenspitzen aufweist und so dimensioniert ist, daß sie ein Oberteil des leeren Pipettenspitzengestells eng aufnimmt, wobei die Seitenwandelemente der Führung entlang der Seitenträgerelemente des Gestells nach unten gleiten, um den Nachfüllpack (10) auf das leere Pipettenspitzengestell (12) zu führen, wobei die distalen Endteile der Pipettenspitzen (24) vertikal über den Löchern (23) in der Organisierschale (21) des Spitzengestells ausgerichtet sind und sich vertikal in diese erstrecken.

14. Nachfüllpack nach Anspruch 11, wobei
das in der Hand haltbare Positioniermittel Abdeckungsmittel (36) umfaßt, die ein Oberteil (38), einen offenen Boden (50) und die angrenzenden Seitenwandelemente (40) umfaßt, die sich von dem Oberteil erstrecken und die Trägerplatte horizontal tragen, um die proximalen Endteile der Pipettenspitzen zu begrenzen und zu schützen, und
das freigebbare Mittel (42) Mittel an den Seitenwandelementen umfaßt, um (i) die Trägerplatte (26) relativ zu dem Abdeckungsmittel (36) freigebbar zu befestigen, und um (ii) von einem Benutzer betätigt zu werden, um die Trägerplatte und die Anordnung von Pipettenspitzen von dem Abdeckungsmittel nach unten durch den offenen Boden (50) in die Löcher (23) in der Organisierschale (21) freizugeben, wenn die Trägerplatte über dem leeren Pipettenspitzengestell (12) positioniert ist, wobei die distalen Endteile der Pipettenspitzen sich in das leere Pipettenspitzengestell erstrecken, um ein Nachfüllen des leeren Pipettenspitzengestells zu bewirken.

15. Nachfüllpack nach Anspruch 14, wobei die angrenzenden Seitenwandelemente (40) sich verbinden, um ein Einfassungsmittel mit offenem Boden (27) zu bilden, das sich über die distalen Endteile der Pipettenspitzen (24) hinaus erstreckt, um das Oberteil des leeren Pipettenspitzengestells aufzunehmen und um das Abdeckungsmittel (36) nach unten über das leere Pipettenspitzengestell (12) zu führen, wobei die distalen Endteile der Pipettenspitzen mit den Löchern (23) in der Organisierschale (21) des leeren Pipettenspitzengestells ausgerichtet sind.

16. Nachfüllpack nach Anspruch 14, wobei das Abdeckungsmittel (36) und das freigebbare Mittel (42) eine flexible Kunststoffabdeckung umfassen, die ein nach innen flexibles Oberteil (38) über den proximalen Enden der Pipettenspitzen (24) aufweist, und wobei der offene Boden (50) durch nach außen flexible Seitenwandelemente (40) definiert ist, die sich von dem Oberteil erstrecken, um die Trägerplatte (26) innerhalb der Abdeckung zu umgeben und mit dieser freigebbar in Eingriff zu stehen und freigebbar dieselbe zu befestigen, wodurch eine Kraft auf das Oberteil nach innen das Oberteil nach innen biegen wird, um die proximalen Enden der Pipettenspitzen zu pressen, und die Seitenwandelemente nach außen biegen wird, um die Trägerplatte und die Anordnung von Spitzen durch den offenen Boden der Abdeckung und in das leere Pipettenspitzengestell freizugeben.

17. Nachfüllpack nach Anspruch 14, wobei
das Oberteil (30) des Abdeckungsmittels (36) von den angrenzenden Seitenwandelementen getrennt ist, die ein rohrförmiges Gehäuse (148) bilden und ein offenes Oberteil (152) und einen offenen Boden (150) aufweisen,
das separate Oberteil sich horizontal innerhalb des offenen Oberteils des Gehäuses erstreckt und als eine Abwärtsdruckplatte (144) innerhalb des Gehäuses manuell bewegbar ist, um eine Betätigung des freigebbaren Mittels (136) und ein Abgeben der Anordnung von Pipettenspitzen (24) in das leere Pipettenspitzengestell zu bewirken.

18. Nachfüllpack nach Anspruch 17, ferner umfassend, daß untere Teile des rohrförmigen Gehäuses (148) eine Einfassung (160) bilden, um das Gehäuse auf das Oberteil des leeren Pipettenspitzengestells während dessen Nachladens zu führen.

19. Nachfüllpack nach Anspruch 17 oder 18, wobei das freigebbare Mittel (136) ein Führungsmittel umfaßt, um die Druckplatte (144) in Richtung der Trägerplatte (146) zu bewegen und somit ein Freigeben der Pipettenspitzen aus dem Nachfüllpack in das leere Pipettenspitzengestell zu bewirken.

20. Nachfüllpack nach Anspruch 14, wobei das freigebbare Mittel (136) sich zwischen der Trägerplatte (146) und den Seitenwandelementen (154) des Abdeckungsmittels befindet.

21. Nachfüllpack nach Anspruch 17, wobei
die Anordnung von Pipettenspitzen (24) eine Vielzahl von vertikal getrennten Anordnungen von Pipettenspitzen umfaßt, wobei die Pipettenspitzen in allen bis auf einer untersten der Anordnungen in die Pipettenspitzen der nächst tieferen Anordnung eingeschoben sind, und
der Nachfüllpack ferner Pipettenspitzenstützplatten (138) umfaßt, um jede vertikal getrennte Anordnung von Pipettenspitzen zu stützen, wobei jede Stützplatte (138) sich horizontal innerhalb des Gehäuses (148) erstreckt, wobei distale Endteile der Pipettenspitzen, die dadurch gestützt sind, sich durch Löcher in der Stützplatte erstrecken, und wobei proximale Endteile der Pipettenspitzen, die dadurch gestützt sind, sich vertikal über der Stützplatte erstrecken, wodurch die Trägerplatte (26, 146) und anschließend danach die Stützplatte, die die unterste der Anordnungen von Pipettenspitzen (24) stützt, nacheinander mit der untersten Anordnung von Pipettenspitzen bei einer Bewegung der Druckplatte (144) innerhalb des Gehäuses nach unten aus dem Gehäuse ausgestoßen werden.

22. Nachfüllpack nach Anspruch 21, wobei das Gehäuse (148) vertikal beabstandete Feststellungen (158) entlang dessen gegenüberliegenden Innenwänden umfaßt, um eine abgestufte Bewegung der Druckplatte nach unten in das Gehäuse zuzulassen.

23. Nachfüllpack nach Anspruch 11, wobei
das Positioniermittel (35) einen Behälter (36) aus leichtem Material mit niedriger Masse umfaßt, der ein geschlossenes, sich horizontal erstreckendes, nach innen flexibles Oberteil (38) und angrenzende, nach außen flexible Seitenwände (40) aufweist, die sich vertikal von dem geschlossenen Oberteil des Behälters erstrecken, wobei Trägerplattenträgermittel (44) an gegenüberliegenden Wänden der Seitenwände angeordnet sind, wobei die Trägerplatte (26) so dimensioniert ist, daß sie sich innerhalb des Behälters zur horizontalen Unterstützung erstreckt, so daß Enden der proximalen Endteile der Pipettenspitzen benachbart zu dem geschlossenen Oberteil des Behälters liegen, und Enden der distalen Endteile der Pipettenspitzen über dem offenen Boden des Behälters liegen, wodurch die proximalen Endteile der Pipettenspitzen durch die Trägerplatte und das geschlossene Oberteil und die Seitenwände des Behälters über dem Trägermittel geschützt sind, und wodurch ein Positionieren der Trägerplatte über dem leeren Pipettenspitzengestell (12) die distalen Endteile der Pipettenspitzen (24) mit Löchern (23) in der Organisierschale (21) des leeren Pipettenspitzengestells ausrichtet, wobei die Löcher zumindest zu einem Teil der Anordnung von Öffnungen (28) in der Trägerplatte (26) passen, und wobei ein Biegen des geschlossenen Oberteils des Behälters nach innen die Seitenwände (40) nach außen biegt, um die Trägerplatte durch den offenen Boden des Behälters auf die Organisierschale des leeren Pipettenspitzengestells freizugeben, wobei die distalen Endteile der Spitzen in die Anordnung von Löchern in der Schale gelangen, um das leere Pipettenspitzengestell nachzufüllen.

24. Nachfüllpack nach Anspruch 23, wobei der Behälter (36) ferner untere Seitenwandteile unter dem Trägermittel umfaßt, die eine sich nach unten erstreckende, rohrförmige Einfassung mit offenem Boden (27) bilden, um den Behälter auf das Spitzengestell (12) zu führen, wobei die unteren Seitenwandteile sich entlang der Seitenträgerelemente des Gestells bewegen und die distalen Endteile der Pipettenspitzen durch die Einfassung geschützt sind.

25. Nachfüllpack nach Anspruch 11, wobei
der Nachfüllpack ferner eine Vielzahl von Stützplatten (138) aus leichtem, halbstarrem Material umfaßt, durch die hindurch jeweils eine Anordnung von Löchern vorgesehen ist, die der Anordnung von Löchern in der Trägerplatte (146) entspricht, wobei jedes Loch in jeder Stützplatte (138) so strukturiert ist, daß es einen distalen Endteil einer Pipettenspitze aufnimmt, um eine Anordnung von Pipettenspitzen vertikal zu tragen und horizontal zu organisieren,
die Vielzahl von Pipettenspitzen (24) eine Vielzahl von Anordnungen (133) von Pipettenspitzen umfaßt, wobei die Pipettenspitzen in einer ersten Anordnung (133a) distale Endteile, die sich vertikal durch die Löcher in der Trägerplatte (146) zur Unterstützung durch diese erstrecken, und proximale Endteile aufweisen, die sich vertikal über den Löchern in der Trägerplatte (146) zur Unterstützung durch diese erstrecken, wobei die Pipettenspitzen in einer zweiten Anordnung (133b) distale Endteile aufweisen, die sich durch die Löcher in einer unteren der Stützplatten (138b) erstrecken, die auf den proximalen Enden der Pipettenspitzen in der ersten Anordnung ruht, die auf der Trägerplatte getragen sind, und die in die distalen Endteile der Spitzen in der ersten Anordnung (133a) eingeschoben sind, und proximale Endteile aufweisen, die sich über der unteren Stützplatte (138b) erstrecken, wobei die Pipettenspitzen in einer dritten Anordnung (133c) distale Endteile aufweisen, die sich durch die Löcher in einer nächst unteren der Stützplatten (138c) erstrecken, die auf den proximalen Enden der Pipettenspitzen in der zweiten Anordnung ruht, die auf der untersten Stützplatte getragen sind, und die in die distalen Endteile der Spitzen in der zweiten Anordnung eingeschoben sind, und proximale Endteile aufweisen, die sich über der nächst unteren Stützplatte (138c) erstrecken usw. für jede der anderen Anordnungen von Pipettenspitzen und Stützplatten, um einen Stapel von Anordnungen von Pipettenspitzen und Stützplatten zu definieren,
das Positioniermittel ferner ein rohrförmiges Gehäuse (148) umfaßt, um den Stapel von Anordnungen von Pipettenspitzen und Stützplatten aufzunehmen, und das Trägermittel (156) umfaßt, um die Trägerplatte benachbart zu dessen unterem offenen Ende freigebbar und horizontal zu tragen, und
der Nachfüllpack ferner eine sich horizontal erstreckende Druckplatte (144) in einem offenen oberen Ende des Gehäuses (148) umfaßt, das für eine Bewegung nach unten in das Gehäuse getragen ist, um mit den proximalen Endteilen einer obersten der Anordnungen von Pipettenspitzen in Eingriff zu stehen, wodurch die Trägerplatte und anschließend danach die Stützplatte, die eine unterste der Anordnungen von Pipettenspitzen stützt, nacheinander aus dem Gehäuse bei einer Bewegung der Druckplatte innerhalb des Gehäuses nach unten ausgestoßen werden.

26. Nachfüllpack nach Anspruch 25, wobei das rohrförmige Gehäuse (148) eine Einfassung (160) an einem unteren Ende unter dem Trägermittel umfaßt, um das Gehäuse auf das leere Pipettenspitzengestell (12) zu zentrieren und zu führen, wobei die distalen Endteile der ersten Anordnung von Pipettenspitzen mit entsprechenden Löchern (23) in der Organisierschale (21) des Spitzengestells ausgerichtet sind.

27. Nachfüllpack nach Anspruch 11, wobei das Positioniermittel eine Hülse (206, 362) umfaßt, die die Trägerplatte (202, 318) freigebbar aufnimmt und umgibt.

28. Nachfüllpack nach Anspruch 27, wobei die Hülse (206, 362) ein Band aus flexiblem Material umfaßt, dessen entgegengesetzte Enden durch freigebbare Verriegelungsmittel (214, 366) befestigt sind.

29. Nachfüllpack nach Anspruch 28, wobei das Band einen sich in Längsrichtung erstreckenden, unteren Kanal (216, 368) umfaßt, um eine Randkante der Trägerplatte (202, 318) aufzunehmen und somit die Trägerplatte innerhalb der Hülse freigebbar zu befestigen, die durch das Band definiert ist, während es sich um die Trägerplatte wickelt und diese umgibt.

30. Nachfüllpack nach Anspruch 29, wobei das Band einen oberen Kanal (370) umfaßt, um eine Randkante einer oberen Abdeckung (372) aufzunehmen und somit die obere Abdeckung der proximalen Enden der Anordnung der Pipettenspitzen, die von dem Trägerstück gestützt sind, freigebbar zu befestigen.

31. Nachfüllpack nach Anspruch 27, wobei
die Trägerplatte (318) eine erste Trägerplatte umfaßt,
die Anordnung von Pipettenspitzen (312) eine erste Anordnung von Pipettenspitzen umfaßt,
und die in der Hand haltbare Hülse (362) eine erste in der Hand haltbare Hülse umfaßt, und
der Nachfüllpack ferner umfaßt:
eine zweite Trägerplatte (318'), die auf dem proximalen Endenteil der ersten Anordnung von Pipettenspitzen ruht, und durch die hindurch eine Anordnung von Löchern (320') vorgesehen ist, um jeweils einen distalen Endteil einer Pipettenspitze aufzunehmen und somit eine zweite Anordnung von Pipettenspitzen vertikal zu tragen und zu organisieren,
eine zweite Anordnung von Pipettenspitzen (312'), wobei distale Endteile sich vertikal durch die Löcher in der zweiten Trägerplatte erstrecken, um sich in entsprechende der Pipettenspitzen der ersten Anordnung zu schmiegen, wobei proximale Endteile sich vertikal über der zweiten Trägerplatte erstrecken, und
eine zweite in der Hand haltbare Hülse (326'), die die zweite Trägerplatte freigebbar aufnimmt und umgibt.

32. Nachfüllpack nach Anspruch 31, der ferner einen Deckel (380) umfaßt, der freigebbar an einem Oberteil der zweiten in der Hand haltbaren Hülse befestigt ist, um die proximalen Endteile der zweiten Anordnung von Pipettenspitzen zu bedecken.

33. Nachfüllpack nach Anspruch 11, wobei
das Positioniermittel eine Abdeckung (326) umfaßt, um die proximalen Endteile der Pipettenspitzen in Verbindung mit der Trägerplatte zu begrenzen, wobei die Abdeckung eine flexible Kunststoffabdeckung umfaßt, die ein nach innen flexibles Oberteil über den proximalen Enden der Pipettenspitzen (324) und einen offenen Boden aufweist, der nach außen flexible Seiten (348') definiert, die sich von dem Oberteil erstrecken, um die Trägerplatte (318) innerhalb der Abdeckung zu umgeben und mit dieser freigebbar in Eingriff zu stehen und diese zu befestigen, wodurch eine Kraft nach innen auf das Oberteil das Oberteil nach innen biegen wird, um die proximalen Enden der Pipettenspitzen zu pressen, oder wodurch eine Kraft nach außen auf die Seiten die Seiten nach außen biegen wird, um
die Trägerstruktur und die Anordnung von Spitzen durch den offenen Boden der Abdeckung freizugeben,
die Trägerplatte (318) eine erste Trägerplatte umfaßt,
die Anordnung von Pipettenspitzen (324) eine erste Anordnung von Pipettenspitzen umfaßt, und
das Oberteil der Abdeckung eine Anordnung von Löchern (337') umfaßt, die der Anordnung von Löchern in der ersten Trägerplatte entspricht, um Endteile einer zweiten Anordnung von Pipettenspitzen (312') aufzunehmen, die von einer zweiten Trägerplatte (318') gestützt sind, um die ersten und zweiten Anordnungen von Pipettenspitzen ineinanderzulegen und um einen zweiten Nachfüllpack darauf zu stapeln.

## Revendications

1. Pack de recharge (70) pour portoir de pointes de pipettes vide (12, 84), le pack de recharge comprenant des moyens de positionnement de pointes de pipettes à tenir à la main (35, 90) pour tenir de façon libérable une pluralité de pointes de pipettes (24) pour positionner des extrémités distales des pointes de pipettes dans des trous (23) dans un plateau d'organisation rigide pour pointes de pipettes (21, 86), qui s'étend horizontalement, du portoir de pointes de pipettes, dans lequel le pack de recharge (70) inclut une plaque de support (74) supportée par les moyens de positionnement (35, 90) et comprenant une pluralité d'ouvertures (76) susceptibles d'être élargies qui comprennent des moyens de libération (82) pour supporter de façon détachable les pointes de pipettes (24) et pour s'élargir en réponse à une force descendante sur les pointes de pipettes (24) pour distribuer les pointes de pipettes à travers les ouvertures susceptibles d'être élargies (76) dans la plaque de support (74) jusque dans les trous (23) dans le plateau d'organisation (21, 86) dans le portoir à pointes vide (21, 84).

2. Pack de recharge selon la revendication 1, dans lequel les moyens libérables comprennent en outre une plaque de poussoir (80) au-dessus des pointes de pipettes (24) pour exercer la force descendante sur les pointes de pipettes.

3. Pack de recharge selon la revendication 1, dans lequel :
les moyens de positionnement (35, 90) sont formés d'un matériau de faible poids et de faible masse et comprennent des côtés qui s'étendent verticalement (96) en formant un boîtier tubulaire (90) qui se termine dans un fond ouvert (92) recevant la plaque de support (74) de la rangée de pointes de pipettes (24) pour centrer l'arrangement au-dessus d'un portoir de pointes de pipettes vide (84) avec des parties d'extrémité distales des pointes de pipettes positionnées verticalement dans et à travers une rangée de trous dans un plateau d'organisation (86) dans le portoir de pointes de pipettes vide (84), et
les moyens libérables (82) entraînent des moyens susceptibles d'être élargis (108) dans les ouvertures (76) dans la plaque de support (74) pour l'élargissement afin de libérer la rangée de pointes de pipettes (24) à travers les trous dans la plaque de support en réponse à la force descendante sur la rangée de pointes de pipettes.

4. Pack de recharge selon la revendication 3, comprenant en outre des moyens formant poussoir (80) pour exercer la force descendante sur la rangée de pointes de pipettes (24).

5. Pack de recharge selon la revendication 4, dans lequel :
la rangée de pointes de pipettes (24) comprend une rangée de piles de pointes verticales et horizontalement espacées, chaque pile contenant une pluralité de pointes de pipettes de manière que toutes les pointes, à l'exception de celles situées le plus en bas, soient reçues de façon télescopique dans une pointe suivante au-dessous dans la pile, et la pointe située le plus en bas dans chaque pile s'étendant dans un trou différent (76) dans la plaque de support (74) pour être supportée par celle-ci ;
les moyens formant poussoir (80) comprennent une plaque de poussoir qui engage une des pointes de pipettes situées le plus en haut dans chacune des piles verticales, les pointes de pipettes situées le plus en bas dans les piles verticales comprenant des pointes de pipettes qui s'étendent à travers les trous (76) dans la plaque de support (74) pour s'étendre jusque dans le plateau d'organisation (86) du portoir de pointes de pipettes vide (84) lorsque la plaque de support est placée au-dessus de celui-ci ; et
le boîtier tubulaire (90) est dimensionné de manière à (i) recevoir et supporter horizontalement la plaque de support (74) dans le boîtier avec les piles verticales de pointes de pipettes à l'intérieur, et (ii) recevoir la plaque de poussoir (80) à une extrémité supérieure ouverte du boîtier avec des parois latérales du boîtier supportant la plaque de poussoir pour un mouvement descendant jusque dans le boîtier pour effectuer une libération séquentielle des pointes de pipettes situées le plus en bas dans les piles verticales jusque dans le portoir de pipettes vide.

6. Pack de recharge selon la revendication 5, dans lequel la plaque de support (74) inclut des moyens déplaçables (108) s'étendant jusque dans les trous (76) pour définir des ouvertures susceptibles d'être élargies afin de recevoir et de maintenir les pointes de pipettes situées le plus en bas des piles verticales et pour s'élargir pour recevoir et faire passer les pointes de pipettes situées le plus en bas tandis que les pointes se déplacent vers le bas avec le mouvement de la plaque de poussoir (80) pour être libérées depuis le pack de recharge jusque dans le portoir de pointes de pipettes vide.

7. Pack de recharge selon la revendication 6, dans lequel le boîtier (90) inclut des moyens à indentation verticalement espacés (98) le long de ses parois intérieures opposées pour permettre un mouvement descendant de la plaque de poussoir (80) jusque dans le boîtier et pour empêcher un mouvement de retour montant de la plaque poussoir dans le boîtier.

8. Pack de recharge selon la revendication 6, dans lequel la plaque de poussoir (80) porte une pluralité de moyens d'indexation de pointes de pipettes espacés (110) qui s'engagent dans des extrémités proximales des pointes de pipettes situées le plus en haut dans les piles verticales afin de maintenir les piles verticales verticalement alignées à l'intérieur du boîtier (90) tandis que la plaque de poussoir (80) est déplacée vers le bas à l'intérieur du boîtier pour libérer successivement des pointes de pipettes situées le plus en bas jusque dans le portoir de pointes de pipettes vide (84) à travers les ouvertures susceptibles d'être élargies (76) dans la plaque de support (74).

9. Pack de recharge selon la revendication 1, dans lequel :
les moyens de positionnement (35) comprennent une plaque d'organisation et de support de pipettes (74) d'un matériau de poids léger semi-rigide ayant une rangée de trous qui la traverse, chaque trou dans la plaque de support recevant une partie d'extrémité distale d'une pointe de pipette (24) pour supporter verticalement et organiser une rangée de pointes de pipettes ;
la rangée de pointes de pipettes (24) comprend une rangée de piles verticales de pipettes espacées horizontalement, chaque pile contenant une pluralité de pointes de pipettes dans lesquelles toutes les pointes, à l'exception de celles situées le plus en bas sont reçues de façon télescopique dans une pointe suivante au-dessous dans la pile, et la pointe située le plus en bas dans chaque pile s'étendant dans un trou différent dans la plaque de support pour être supportée par celle-ci, et une partie d'extrémité distale de la pointe située le plus en bas s'étendant au-dessous de la plaque de support tandis que la partie d'extrémité proximale de la pointe située le plus en bas s'étend au-dessus de la plaque de support ;
les moyens de positionnement (35) comprennent en outre un boîtier tubulaire (90) qui supporte horizontalement la plaque de support (74) en position adjacente à une extrémité inférieure ouverte (92) de celle-ci pour confiner verticalement et protéger les piles de pointes de pipettes ; et
dans lequel le pack de recharge comprend en outre :
une plaque de poussoir (80) qui s'étend horizontalement dans l'extrémité supérieure ouverte (92) du boîtier et supportée pour un mouvement descendant jusque dans le boîtier pour engager une extrémité supérieure d'une partie d'extrémité proximale de l'une des pointes de pipettes située le plus en haut dans chacune des piles ; et
des moyens déplaçables (108) qui s'étendent jusque dans les trous de la plaque de support (74) et définissent les ouvertures susceptibles d'être élargies (76) pour recevoir et maintenir les parties d'extrémité distales des pointes de pipettes situées le plus en bas et pour s'élargir et recevoir en faisant passer les parties d'extrémité proximales des pointes de pipettes situées le plus en bas en réponse au mouvement descendant de la plaque de poussoir (80) jusque dans le boîtier pour libérer les pointes de pipettes situées le plus en bas depuis le pack de recharge afin de recharger le portoir de pointes.

10. Pack de recharge selon la revendication 9, dans lequel le boîtier tubulaire (90) comprend une jupe (102) à une extrémité inférieure au-dessous de la plaque de support (74) pour centrer et guider le boîtier sur le portoir de pointes de pipettes vide (84), tandis que la partie d'extrémité distale de la pointe située le plus en bas dans chaque pile est alignée avec un trou correspondant dans le plateau d'organisation (86) du portoir de pointes afin de reposer verticalement dans celui-ci lors d'un abaissement du boîtier sur le portoir de pointes.

11. Pack de recharge (10) pour un portoir de pointes de pipettes vide (12), le pack de recharge comprenant un support qui s'étend horizontalement (22) incluant une rangée de trous (28) pour recevoir et organiser une rangée (32) de pointes de pipettes (24) avec des parties d'extrémité proximales (34) au-dessus du support et avec des parties d'extrémité distales (30) au-dessous du support de façon à s'étendre dans une rangée appariée de trous (23) dans un plateau d'organisation rigide (21), qui s'étend horizontalement, du portoir (12) et des moyens de positionnement (35) susceptibles d'être tenus à la main, formés d'un matériau de poids léger et de faible masse et comprenant des côtés verticaux (40, 154) qui se terminent dans un fond ouvert (50) recevant le support (22) de la rangée de pointes de pipettes (24) pour centrer la rangée de pointes de pipettes au-dessus du portoir de pointes de pipettes vide (12) tandis que les extrémités distales des pointes sont positionnées verticalement dans et à travers la rangée de trous (23) dans le plateau d'organisation (21), dans lequel
le support (22) comprend une plaque de support séparée (26, 146) ; et des moyens libérables (42, 136) pour (i) fixer de façon libérable la plaque de support de la rangée de pointes de pipettes (24) à l'intérieur du fond ouvert (50, 150) des moyens de positionnement (35), et (ii) être actionnés par un utilisateur afin de libérer la plaque de support de la rangée de pointes de pipettes depuis les moyens de positionnement vers le bas à travers le fond ouvert (50, 150) jusque dans les trous du plateau d'organisation du portoir de pointes de pipettes vide.

12. Pack de recharge selon la revendication 11, dans lequel les moyens de positionnement incluent une partie de support tubulaire qui reçoit de façon libérable et qui supporte horizontalement la plaque de support (26) avec les parties d'extrémité distales de la rangée de pointes de pipettes (24), s'étendant à travers les trous dans la plaque de support.

13. Pack de recharge selon la revendication 12, dans lequel les moyens de positionnement (35) incluent en outre des éléments de paroi latérale inférieure susceptibles d'être tenus à la main, qui s'étendent verticalement vers le bas depuis la partie de support tubulaire au-delà des parties d'extrémité distales des pointes de pipettes pour former un guide (27) ayant un fond ouvert au-dessous des parties d'extrémité distales des pointes de pipettes et dimensionné pour recevoir de façon étroite un sommet du portoir de pointes de pipettes vide tandis que les éléments de paroi latérale du guide coulissent vers le bas le long des éléments de support latéraux du portoir pour guider le pack de recharge (10) sur le portoir de pointes de pipettes vide (12) tandis que les parties d'extrémité distales des pointes de pipettes (24) sont alignées verticalement au-dessus et s'étendent verticalement à l'intérieur des trous (23) dans le plateau d'organisation (21) du portoir de pointes.

14. Pack de recharge selon la revendication 11, dans lequel :
les moyens de positionnement susceptibles d'être tenus à la main comprennent des moyens formant couvercle (36) qui incluent un sommet (38), un fond ouvert (50), et les éléments de paroi latérale contigus (40) qui s'étendent depuis le sommet et supportent horizontalement la plaque de support pour confiner et protéger les parties d'extrémité proximales des pointes de pipettes ;
les moyens libérables (42) incluent des moyens sur les éléments de paroi latérale (i) pour fixer de façon libérable la plaque de support (26) par rapport aux moyens formant couvercle (36), et (ii) pour être actionnés par un utilisateur afin de libérer la plaque de support de la rangée de pointes de pipettes depuis les moyens formant couvercle vers le bas à travers le fond ouvert (50) jusque dans les trous (23) dans le plateau d'organisation (21) lorsque la plaque de support est positionnée au-dessus du portoir de pointes de pipettes vide (12) tandis que les parties d'extrémité distales des pointes de pipettes s'étendent jusque dans le portoir de pointes de pipettes pour effectuer une recharge du portoir de pointes de pipettes vide.

15. Pack de recharge selon la revendication 14, dans lequel les éléments de paroi latérale contigus (40) se combinent pour former des moyens en jupe inférieure ouverte (27) qui s'étendent au-delà des parties d'extrémité distales des pointes de pipettes (24) pour recevoir le sommet du portoir de pointes de pipettes vide et pour guider les moyens formant couvercle (36) vers le bas au-dessus du portoir de pointes de pipettes vide (12), tandis que les parties d'extrémité distales des pointes de pipettes sont alignées avec les trous (23) dans le plateau d'organisation (21) du portoir de pointes de pipettes vide.

16. Pack de recharge selon la revendication 14, dans lequel les moyens formant couvercle (36) et les moyens libérables (42) comprennent un couvercle capable de fléchir en matière plastique ayant un sommet capable de fléchir vers l'intérieur (38) au-dessus des extrémités proximales des pointes de pipettes (24) et le vont horaire (50) est définie par des éléments de parois latérales capables de fléchir vers l'extérieur (40) s'étendant depuis le sommet pour entourer et engager de façon libérable et fixer la plaque de support (26) à l'intérieur du couvercle, grâce à quoi une force vers l'intérieur sur le sommet va faire fléchir le sommet vers l'intermédiaire pour pressé sur les extrémités proximales des pointes de pipettes et va faire fléchir vers l'extérieur les éléments de paroi latérale pour libérer la plaque de support de la rangée de pointes à travers le fond ouvert de couvercle et jusque dans le portoir de pointes de pipettes vide.

17. Pack de recharge selon la revendication 14, dans lequel :
le sommet (30) des moyens formant couvercle (36) est séparé des éléments de paroi latérale contigus qui forment un boitier tubulaire (148) ayant un sommet ouvert (152) et un fond ouvert (150) ;
le sommet séparé s'étendant horizontalement à l'intérieur du sommet ouvert du boîtier et étant manuellement mobiles à la manière d'une plaque de poussoir descendante (144) à l'intérieur du boîtier pour procéder à l'actionnement des moyens libérables (136) et à une distribution de la rangée de pointes de pipettes (24) jusque dans le portoir de pointes de pipettes vide.

18. Pack de recharge selon la revendication 17, comprenant en outre des parties inférieures du boîtier tubulaire (148), formant une jupe (160) pour guider le boîtier jusque sur le sommet du portoir de pointes de pipettes vide pendant la recharge de celui-ci.

19. Pack de recharge selon l'une ou l'autre des revendications 17 et 18, dans lesquels les moyens libérables (136) incluent des moyens de guidage pour le mouvement de la plaque de poussoir (144) vers la plaque de support (146), pour effectuer une libération des pointes de pipettes depuis le pack de recharge jusque dans le portoir de pointes de pipettes vide.

20. Pack de recharge selon la revendication 14, dans lequel les moyens libérables (136) sont situés entre la plaque de support (146) et les éléments de paroi latérale (154) des moyens formant couvercle.

21. Pack de recharge selon la revendication 17, dans lequel :
la rangée de pointes de pipettes (24) comprend une pluralité de rangées séparées verticalement de pointes de pipettes, les pointes de pipettes dans toutes les rangées, à l'exception d'une rangée située le plus en bas, étant reçues de façon télescopique dans les pointes de pipettes de la rangée inférieure suivante ; et
le pack de recharge comprend en outre des plaques de support de pointes de pipettes (138) pour porter chaque rangée verticalement séparée de pointes de pipettes, chaque plaque de support (138) s'étendant horizontalement à l'intérieur du boîtier (148) tandis que des parties d'extrémité distales des pointes de pipettes portées par celle-ci s'étendent à travers des trous dans la plaque de support, et que des parties d'extrémité proximales des pointes de pipettes portées par celle-ci s'étendent verticalement au-dessus de la plaque de support, en raison de quoi la plaque de support (26, 146) et de façon séquentielle après celle-ci la plaque de support qui porte la rangée de pointes de pipettes (24) situées le plus en bas, sont successivement éjectées avec la rangée de pointes de pipettes situées le plus en bas depuis le boîtier lors d'un mouvement descendant de la plaque de poussoir (144) à l'intérieur du boîtier.

22. Pack de recharge selon la revendication 21, dans lequel le boîtier (148) inclut des indentations verticalement espacées (158) le long de ses parois intérieures opposées pour permettre un mouvement descendant étagé de la plaque de poussoir jusque dans le boîtier.

23. Pack de recharge selon la revendication 11, dans lequel :
les moyens de positionnement (35) comprennent un conteneur (36) d'un matériau de faible poids et de faible masse ayant un sommet horizontal susceptible de fléchir vers l'intérieur (38) et des parois latérales contiguës (40) susceptibles de fléchir vers l'intérieur s'étendant verticalement depuis le sommet fermé du conteneur, avec des moyens de support de plaque de support (44) sur des parois latérales opposées, la plaque de support (26) étant dimensionnée de façon à s'étendre à l'intérieur du conteneur pour être supportée horizontalement de façon que des extrémités des parties d'extrémité proximales des pointes de pipettes soient adjacentes au sommet fermé du conteneur et que des extrémités des parties d'extrémité distales des pointes de pipettes soient au-dessus du fond ouvert du conteneur grâce à quoi les parties d'extrémité proximales des pointes de pipettes sont protégées par la plaque de support et le sommet fermé et les parois latérales du conteneur au-dessus des moyens de support, et grâce à quoi un positionnement de la plaque de support au-dessus du portoir de pointes de pipettes vide (12) aligne les parties d'extrémité distales des pointes de pipettes (24) avec des trous (23) dans le plateau d'organisation (21) du portoir de pointes de pipettes vide, les trous étant appariés avec au moins une partie de la rangée d'ouvertures (28) dans la plaque de support (26), et un fléchissement vers l'intérieur du sommet fermé du conteneur faisant fléchir vers l'extérieur les parois latérales (40) pour libérer la plaque de support à travers le fond ouvert du conteneur jusque sur le plateau d'organisation du portoir de pointes de pipettes vide, tandis que les parties d'extrémité distales des pointes passent jusque dans la rangée de trous dans le plateau pour recharger le portoir de pointes de pipettes vide.

24. Pack de recharge selon la revendication 23, dans lequel le conteneur (36) comprend en outre des parties de paroi latérale inférieures au-dessous des moyens de support qui forment une jupe tubulaire s'étendant vers le bas et ouverte au fond (27) pour guider le conteneur jusque sur le portoir de pointes (12) avec les parties de paroi latérale inférieures se déplaçant le long des éléments de support latéraux du portoir, et les parties d'extrémité distales des pointes de pipettes protégées par la jupe.

25. Pack de recharge selon la revendication 11, dans lequel :
le pack de recharge comprend en outre une pluralité de plaques de support (138) d'un matériau de faible poids et semi-rigide, qui comportent chacune une rangée de trous qui la traversent en correspondance de la rangée de trous dans la plaque de support (146), chaque trou dans chaque plaque de support (138) étant structuré de façon à recevoir une partie d'extrémité distale d'une pointe de pipette pour supporter verticalement et organiser horizontalement une rangée de pointes de pipettes ;
la pluralité de pointes de pipettes (24) comprend une pluralité de rangées (133) de pointes de pipettes, les pointes de pipettes dans une première rangée (133a) ayant des parties d'extrémité distales qui s'étendent verticalement à travers les trous dans la plaque de support (146) pour être supportées par celle-ci, et des parties d'extrémité proximales qui s'étendent verticalement au-dessus des trous dans la plaque de support (146) pour être supportées par celle-ci, les pointes de pipettes dans une seconde rangée (133b) ayant des parties d'extrémité distales s'étendant à travers les trous dans une des plaques de support (138b) située en bas, qui reposent sur les extrémités proximales des pointes de pipettes dans la première rangée supportée sur la plaque de support et reçues de façon télescopique dans les parties d'extrémité distales des pointes dans la première rangée (133a), et ayant des parties d'extrémité proximales qui s'étendent au-dessus de la plaque de support située en bas (138b), les pointes de pipettes dans une troisième rangée (133c) ayant des parties d'extrémité distales qui s'étendent à travers les trous dans une suivante des plaques de support (138c) depuis le bas, reposant sur les extrémités proximales des pointes de pipettes dans la seconde rangée supportée sur la plaque de support située le plus en bas et reçues de façon télescopique dans les parties d'extrémité distales des pointes dans la seconde rangée et ayant des parties d'extrémité proximales s'étendant au-dessus de la plaque de support suivante depuis le bas (138c), et ainsi de suite pour chacune des autres rangées des pointes de pipettes et des plaques de support pour définir une pile de rangées de pointes de pipettes et de plaques de support ;
les moyens de positionnement comprenant en outre un boîtier tubulaire (148) pour recevoir la pile de rangées de pointes de pipettes et de plaques de support et comprenant des moyens de support (156) pour supporter de manière libérable et horizontalement la plaque de support adjacente à une extrémité inférieure ouverte de celle-ci ; et
le pack de recharge comprend en outre une plaque de poussoir horizontale (144) dans une extrémité supérieure ouverte du boîtier (148) et supportée pour un mouvement descendant jusque dans le boîtier pour engager les parties d'extrémité proximales de l'une des rangées de pointes de pipettes situées le plus en haut, grâce à quoi la plaque de support et de façon séquentielle après celle-ci la plaque de support qui porte une des rangées de pointes de pipettes situées le plus en bas est successivement éjectée depuis le boîtier lors d'un mouvement descendant de la plaque de poussoir à l'intérieur du boîtier.

26. Pack de recharge selon la revendication 25, dans lequel le boîtier tubulaire (148) comprend une jupe (160) à une extrémité inférieure au-dessous des moyens de support pour centrer et guider le boîtier sur le portoir de pointes de pipettes vide (12), tandis que les parties d'extrémité distales de la première rangée de pointes de pipettes sont alignées avec des trous correspondants (23) dans le plateau d'organisation (21) du portoir de pointes.

27. Pack de recharge selon la revendication 11, dans lequel les moyens de positionnement comprennent un fourreau (206, 362) qui reçoit de façon libérable et entoure la plaque de support (202, 318).

28. Pack de recharge selon la revendication 27, dans lequel le fourreau (206, 362) comprend une bande de matériau capable de fléchir ayant des extrémités opposées fixées par des moyens de blocage libérables (214, 366).

29. Pack de recharge selon la revendication 28, dans lequel la bande inclut un canal inférieur qui s'étend longitudinalement (216, 368) pour recevoir un bord marginal de la plaque de support (202, 318) pour fixer de façon libérable la plaque de support à l'intérieur du fourreau défini par la bande tandis qu'elle s'enroule autour et enveloppe la plaque de support.

30. Pack de recharge selon la revendication 29, dans lequel la bande inclut un canal supérieur (370) pour recevoir un bord marginal d'un couvercle de sommet (172) pour fixer de façon libérable le couvercle de sommet sur les extrémités proximales de la rangée de pointes de pipettes portées par la plaque de support.

31. Pack de recharge selon la revendication 27, dans lequel :
la plaque de support (318) comprend une première plaque de support,
la rangée de pointes de pipettes (312) comprend une première rangée de pointes de pipettes,
et le fourreau (362) susceptible d'être tenu à la main comprend un premier fourreau susceptible d'être tenu à la main, et
le pack de recharge comprend de plus :
une seconde plaque de support (318') qui repose sur les parties d'extrémité proximales de la première rangée de pointes de pipettes et ayant une rangée de trous (320') qui la traverse pour recevoir chacun une partie d'extrémité distale d'une pointe de pipette afin de supporter verticalement et d'organiser une seconde rangée de pointes de pipettes ;
une seconde rangée de pointes de pipettes (312') avec des parties d'extrémité distales qui s'étendent verticalement à travers les trous dans la seconde plaque de support afin de se nicher dans des pointes de pipettes correspondantes de la première rangée avec des parties d'extrémité proximales qui s'étendent verticalement au-dessus de la seconde plaque de support ; et
un second fourreau (326') susceptible d'être tenu à la main, qui reçoit de façon libérable et qui entoure la seconde plaque de support.

32. Pack de recharge selon la revendication 31, comprenant en outre un couvercle (380) attaché de façon libérable sur un sommet du second fourreau susceptible d'être tenu à la main pour couvrir les parties d'extrémité proximales de la seconde rangée de pointes de pipettes.

33. Pack de recharge selon la revendication 11, dans lequel :
les moyens de positionnement comprennent un couvercle (326) pour confiner les parties d'extrémité proximales des pointes de pipettes en combinaison avec la plaque de support, le couvercle comprenant un couvercle en matière plastique capable de fléchir ayant un sommet capable de fléchir vers l'intérieur au-dessus des extrémités proximales des pointes de pipettes (324) et un fond ouvert défini par des côtés (348') capables de fléchir vers l'extérieur et s'étendant depuis le sommet afin d'entourer et d'engager de façon libérable et de fixer la plaque de support (318) à l'intérieur du couvercle, grâce à quoi une force vers l'intérieur sur le sommet va faire fléchir le sommet vers l'intérieur pour presser sur les extrémités proximales des pointes de pipettes, ou une force vers l'extérieur sur les côtés va faire fléchir les côtés vers l'extérieur pour libérer la structure de support de la rangée de pointes à travers le fond ouvert du couvercle ;
la plaque de support (318) comprend une première plaque de support ;
la rangée de pointes de pipettes (324) comprend une première rangée de pointes de pipettes ; et
le sommet du couvercle inclut une rangée de trous (337') correspondant à la rangée de trous dans la première plaque de support pour recevoir des parties d'extrémité d'une seconde rangée de pointes de pipettes (312') portées par une seconde plaque de support (318') pour nicher la première et la seconde rangée de pointes de pipettes et empiler un second pack de recharge sur celle-ci.
